# EUROPEAN PATENT APPLICATION

(11) **EP 2 648 226 A1**
(43) Date of publication of application: **09.10.2013**
(21) Application number: 11844350.6
(22) Date of filing: 29.11.2011
(51) Int. Cl.: H01L 31/042, E04D 13/18, F15B 15/10

(54) **SOLAR PANEL UNIT**

(30) Priority: 30.11.2010 JP 2010267568
(71) Applicant: Daikin Industries, Ltd., Osaka-shi, Osaka 530-8323 (JP)
(72) Inventor: SAKAI, Toshiyuki, Sakai-shi Osaka 591-8511 (JP); MATSUURA, Tetsuya, Sakai-shi Osaka 591-8511 (JP)
(74) Representative: Goddar, Heinz J.
(86) International application number: PCT/JP2011/006658
(87) International publication number: WO 2012/073487

(57) **Abstract**

A solar panel unit is provided. The solar panel unit includes at least one solar panel (92a), at least one support member (94) configured to support the solar panel (92a) through at least on rotation shaft (95), and an actuator unit (100) including at least one air bag (101, 102) capable of extending and contracting according to an internal pressure, and configured to rotate the solar panel (92a) around an axis of the rotation shaft (95) according to extension and contraction of the air bag (101, 102).

## Description

### TECHNICAL FIELD

The present disclosure relates to a solar panel unit including a solar panel and an actuator unit for driving the solar panel.

### BACKGROUND ART

Conventionally, a solar panel unit including a solar panel and an actuator unit for driving the solar panel has been known. Driving the actuator unit of this solar panel unit such that a light-receiving surface of the solar panel tracks the movement of the sun increases the amount of sunlight that the solar panel receives and results in an increase in power generated by the solar panel. For example, Patent Document 1 discloses a solar panel unit of this type. The solar panel unit of Patent Document 1 includes a heat-receiving tank constituted by a sealed container filled with a hydraulic fluid and an actuator unit activated by a pressure of the hydraulic fluid expanding in the heat-receiving tank due to reception of radiant heat of sunlight. The actuator unit includes a piston of which an end is fixed to a solar panel, and the pressure applied by the hydraulic fluid causes the piston to reciprocate, thereby driving the solar panel.

### CITATION LIST

### PATENT DOCUMENT

PATENT DOCUMENT 1: Japanese Patent Publication No. H06-301420

### SUMMARY OF THE INVENTION

### TECHNICAL PROBLEM

Meanwhile, an actuator unit for driving a solar panel unit is installed on a roof of a house or a factory, for example. If the actuator unit is considerably heavy, large loads are imposed on the roof. It is accordingly required to improve the load-bearing capacity of the roof in accordance with the imposed loads. In addition, installation of such a heavy actuator unit is difficult.

It is therefore an object of the present disclosure to reduce the weight of an actuator unit configured to drive a solar panel.

### SOLUTION TO THE PROBLEM

A first aspect of the present disclosure relates to a solar panel unit including at least one solar panel (92a), at least one support member (94) configured to support the solar panel (92a) through at least one rotation shaft (95), and an actuator unit (100) including at least one air bag (101, 102) capable of extending and contracting according to an internal pressure, and configured to rotate the solar panel (92a) around an axis of the rotation shaft (95) according to extension and contraction of the air bag (101, 102).

In the first aspect, the solar panel (92a) is supported by the support member (94) through the rotation shaft (95). The solar panel (92a) is caused to rotate around the axis of the rotational shaft (95) by causing the air bag (101, 102) to extend or contract in accordance with the internal pressure.

A second aspect of the present disclosure is the solar panel of the first aspect wherein the air bag (101, 102) includes an opening (101c, 102c) through which a space inside the air bag (101, 102) communicates with a space outside the air bag (101, 102), a reception portion (101b, 102b) supporting a back surface of the solar panel (92a), and a body (101a, 102a) configured to extend by means of compressed air so as to move the reception portion (101b, 102b) toward the solar panel (92a), and the actuator unit (100) includes an air supply/exhaust mechanism (105) configured to perform, in a switchable manner, a first operation in which compressed air is supplied to the space inside the air bag (101, 102) through the opening (101c, 102c) and a second operation in which air in the air bag (101, 102) is exhausted to the outside of the air bag (101, 102) through the opening (101c, 102c).

According to the second aspect, when the air supply/exhaust mechanism (105) performs the first operation, compressed air is supplied to the space inside the air bags (101, 102) through the opening (101c, 102c). Consequently, the body (101a, 102a) of the air bag (101, 102) extends to cause the reception portion (101b, 102b) to move toward the solar panel (92a). The reception portion (101b, 102b) pushes the back surface of the solar panel (92a) upward to cause the solar panel (92a) to rotate in a direction in which the air bag (101, 102) extends. On the other hand, when the air supply/exhaust mechanism (105) performs the second operation, air in the air bag (101, 102) is exhausted to the outside through the opening (101a, 102c). Consequently, loads of the solar panel (92a) act downwardly on the air bag (101, 102) whose internal pressure has decreased, thereby causing the air bag (101, 102) to contract. As the result, the solar panel (92a) rotates in a direction in which the reception portion (101b, 102b) of the air bag (101, 102) contracts.

A third aspect of the present disclosure is the solar panel unit of the second aspect wherein the actuator unit (100) includes the two air bags (101, 102) disposed such that the rotation shaft (95) is located between the air bags (101, 102).

In the third aspect, the two air bags (101, 102) disposed such that the rotation shaft (95) is located between the air bags (101, 102) are employed as the actuator unit (100). With this configuration, the solar panel (92a) can be rotated in a predetermined direction (a first direction) by causing the air bag (101), which is one of the two air bags (101, 102), to push the solar panel (92a) upward whereas the solar panel (92a) can be rotated in a second direction opposite to the first direction by causing the other air bag (102) to push the solar panel (92a) upward. In this manner, it is ensured that the solar panel (92a) rotates in both opposite directions.

A fourth aspect of the present disclosure is the solar panel unit of the second aspect, wherein the actuator unit (100) includes the air bag (101) as a single air bag, and an elastic member (99a, 99b) causing an urging force to act on the solar panel (92a), in such a manner that the urging force acts in a direction opposite to a direction in which the solar panel rotates when the air bag (101) extends.

According to the fourth aspect, the air bag (101) provided as a single air bag and the elastic member (99a, 99b) causing the urging force to act on the solar panel (92a) in the direction opposite to the direction in which the solar panel rotates when the air bag (101) extends are employed as the actuator unit (100). With this configuration, the solar panel (92a) can be rotated in a predetermined direction (a first direction) by causing the air bag (101) to push the solar panel (92a) upward whereas the solar panel (92a) can be rotated in a second direction opposite to the first direction by causing the elastic member to urge the solar panel (92a). In this manner, it is ensured that the solar panel (92a) rotates in both opposite directions.

A fifth aspect of the present disclosure is the solar panel of the fourth aspect wherein the actuator unit (100) includes a lock mechanism (170) configured to control rotation of the solar panel (92a) urged by the elastic member (99a, 99b) to retain the solar panel (92a) at a predetermined rotational angle.

When external forces such as a wind are exerted on the solar panel (92a), it is sometimes impossible to retain the solar panel at a rotational angle. In order to address this problem, the fifth aspect includes the lock mechanism (170), by which the solar panel (92a) can be retained at a desired rotational angle even when external forces such as a wind are exerted on the solar panel (92a).

The sixth aspect of the present disclosure is the solar panel unit according to any one of the second to fifth aspects, wherein the actuator unit (100) includes a rod member (103, 104) having an end coupled to the back surface of the solar panel (92a) and another end coupled to the reception portion (101b, 102b) of the air bag (101, 102).

According to the sixth aspect, the solar panel (92a) is supported by the air bag (101, 102) through the rod member (103, 104). This configuration enables the solar panel (92a) to rotate in a position spaced from a surface on which the air bag (101, 102) is installed, thereby reducing the possibility that the solar panel (92a) comes into contact with the surface.

A seventh aspect of the present disclosure is the solar panel unit of any one of the first to sixth aspect, including a plurality of the solar panels (92a , 92b), a plurality of the support members (94, 94, ...) each supporting an associated one of the plurality of the solar panels (92a , 92b) through an associated one of the rotation shafts (95), the actuator unit (100) provided in association with the solar panel (92a) included in the plurality of the solar panels (92a , 92b), and a link mechanism (98) linking the plurality of the solar panels (92a , 92b) to one another such that the solar panels (92a, 92b) are positioned at an identical rotational angle.

According to the seventh aspect, when the actuator unit (100) provided in association with the solar panel (92a) included in the plurality of the solar panels (92a, 92b) drives the solar panel (92a), the link mechanism (98) moves the other solar panel (92b) such that the solar panel (92b) is positioned at the same rotational angle as that of the solar panel (92a). Thus, all of the solar panels (92a, 92b) rotate in a synchronized manner.

### ADVANTAGES OF THE INVENTION

According to the first aspect, the air bag (101, 102) is used in the actuator unit (100) configured to rotate the solar panel (92a). The air bag (101, 102) is formed in a hollow shape and capable of extending and contracting by means of an air pressure. Accordingly, the air bag (101, 102) can be made of a relatively lightweight material such as rubber, thereby enabling reduction of the weight of the actuator unit (100). In addition, since the solar panel (92a) is supported through the rotational shaft (95), simply exerting a force generated when the air bag (101, 102) changes its shape on a portion of the solar panel (92a) ensures that the solar panel (92a) rotates around the axis of the rotational shaft (95). Further, since the solar panel (92a) is supported by the support member (94), loads acting on the air bag (101, 102) are reduced. Consequently, it is possible to rotate the solar panel (92a) even if a small internal pressure acts on the inside of the air bag (101, 102).

According to the second aspect, the solar panel (92a) can be rotated in both opposite directions by causing the air bag (101, 102) to extend or contract through switching of the air supply/exhaust mechanism (105).

According to the third aspect, since the pair of the air bags (101, 102) are disposed such that the rotation shaft (95) is located between the air bags, it can be further ensured that the solar panel (92a) rotates in both opposite directions.

According to the fourth aspect, since the solar panel unit includes the air bag (101) as a single air bag, and the elastic member (99a, 99b) causing an urging force to act on the solar panel (92a) in a direction opposite to a direction in which the solar panel rotates when the air bag (101) extends, it can be further ensured that the solar panel (92a) rotates in both opposite directions.

According to the fifth aspect, the lock mechanism (170) enables the solar panel (92a) to be retained at a desired rotational angle even when external forces such as a wind are exerted on the solar panel (92a).

According to the sixth aspect, the solar panel (92a) can be supported in a position spaced from the surface on which the actuator unit (100) is installed, a region where the solar panel (92a) can rotate is ensured.

According to the seventh aspect, all of the solar panels (92a, 92b) can be rotated to be positioned at an identical rotational angle by using the actuator unit (100) provided as a single actuator unit. The seventh aspect enables simplification of the solar panel unit.

### BRIEF DESCRIPTION OF THE DRAWINGS

[FIG. 1] FIG. 1 is a system diagram illustrating an overall configuration of a hot water supply system according to Embodiment 1.
[FIG. 2] FIG. 2 schematically illustrates a configuration of an air compression unit of Embodiment 1.
[FIG. 3] FIG. 3 schematically illustrates a configuration of a pressurization unit of Embodiment 1. FIG. 3(A) illustrates an exemplary state in which the volume of a water-pressurizing chamber has increased whereas FIG. 3(B) illustrates an exemplary state in which the volume of the water-pressurizing chamber has decreased.
[FIG. 4] FIG. 4 is a perspective view schematically illustrating a solar panel unit of Embodiment 1 which is installed on a roof.
[FIG. 5] FIG. 5 illustrates a mounting unit for the solar panel unit of Embodiment 1.
[FIG. 6] FIG. 6 is a cross-sectional view taken along the line VI-VI in FIG. 4.
[FIG. 7] FIG. 7 illustrates an exemplary state in which solar panels face east, viewed along the direction indicated by reference character A in FIG. 4.
[FIG. 8] FIG. 8 illustrates an exemplary state in which the solar panels face south, viewed along the direction indicated by reference character A in FIG. 4.
[FIG. 9] FIG. 9 illustrates an exemplary state in which the solar panels face west, viewed along the direction indicated by reference character A in FIG. 4.
[FIG. 10] FIG. 10 schematically illustrates an initial first operation performed by the air compression unit of Embodiment 1, in the order of FIG. 10(A), FIG. 10(B), and FIG. 10(C).
[FIG. 11] FIG. 11 schematically illustrates a second operation performed by the air compression unit of Embodiment 1, in the order of FIG. 11(A), FIG. 11(B), and FIG. 11(C).
[FIG. 12] FIG. 12 schematically illustrates the first operation performed by the air compression unit of Embodiment 1, in the order of FIG. 12(A), FIG. 12(B), and FIG. 12(C).
[FIG. 13] FIG. 13 illustrates a solar panel unit according to Embodiment 2, in a manner similar to FIG. 6.
[FIG. 14] FIG. 14 illustrates the solar panel unit of Embodiment 2 in a state corresponding to that illustrated in FIG. 7.
[FIG. 15] FIG. 15 illustrates the solar panel unit of Embodiment 2 in a state corresponding to that illustrated in FIG. 8.
[FIG. 16] FIG. 16 illustrates the solar panel unit of Embodiment 2 in a state corresponding to that illustrated in FIG. 9.

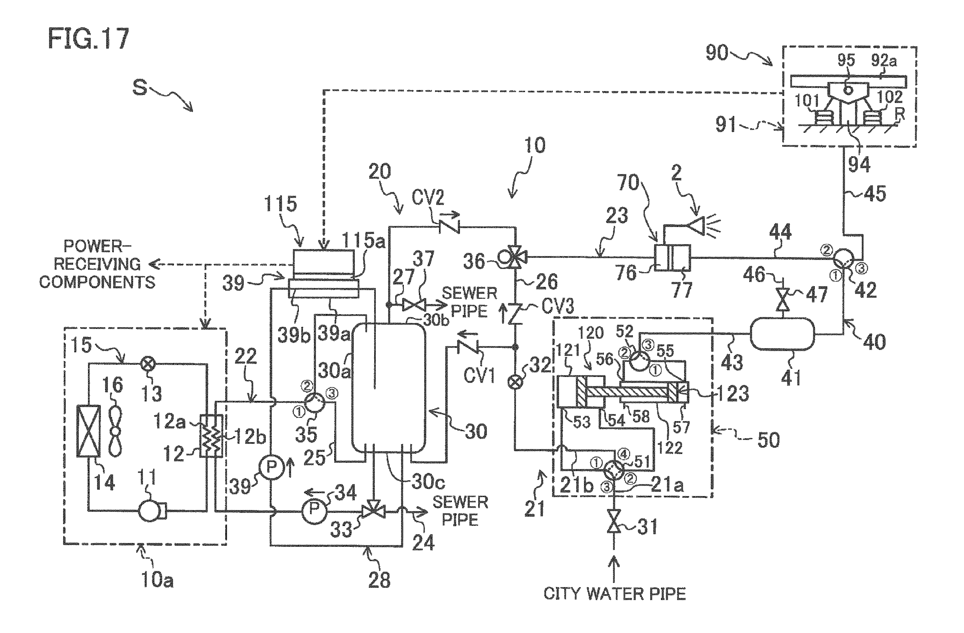

[FIG. 17] FIG. 17 is a system diagram illustrating an overall configuration of a hot water supply system according to Embodiment 3.
[FIG. 18] FIG. 18 schematically illustrates a configuration of an air compression unit of Embodiment 3.
[FIG. 19] FIG. 19 schematically illustrates an initial first operation performed by the air compression unit of Embodiment 3, in the order of FIG. 19(A), FIG. 19(B), and FIG. 19(C).
[FIG. 20] FIG. 20 schematically illustrates a second operation performed by the air compression unit of Embodiment 3, in the order of FIG. 20(A), FIG. 20(B), and FIG. 20(C).
[FIG. 21] FIG. 21 schematically illustrates the first operation performed by the air compression unit of Embodiment 3, in the order of FIG. 21 (A), FIG. 21 (B), and FIG. 21 (C).
[FIG. 22] FIG. 22 is a system diagram illustrating an overall configuration of a hot water supply system according to Embodiment 4.
[FIG. 23] FIG. 23 is a longitudinal cross-sectional view of an ejector type pressurization mechanism according to Embodiment 4.
[FIG. 24] FIG. 24 is a system diagram illustrating an overall configuration of a hot water supply system according to Embodiment 5.

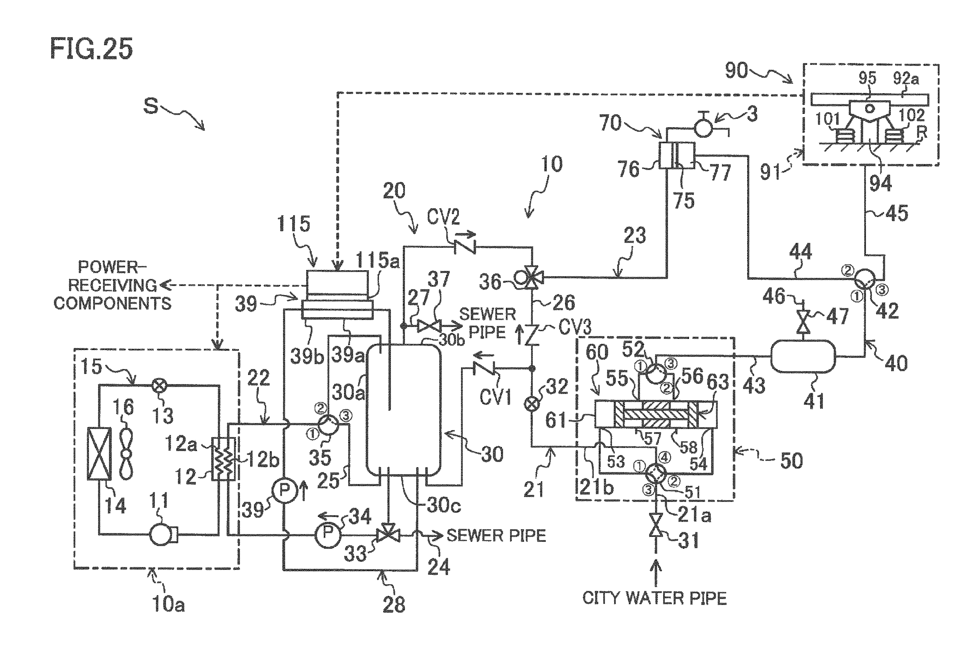

[FIG. 25] FIG. 25 is a system diagram illustrating an overall configuration of a hot water supply system according to Embodiment 6.
[FIG. 26] FIG. 26 is a system diagram illustrating an overall configuration of a hot water supply system according to Embodiment 7.
[FIG. 27] FIG. 27 is a system diagram illustrating an overall configuration of a hot water supply system according to Embodiment 8.
[FIG. 28] FIG. 28 is a system diagram illustrating an overall configuration of a hot water supply system according to Embodiment 9.
[FIG. 29] FIG. 29 schematically illustrates a configuration of a pressurization unit of a hot water supply system according to Embodiment 10. FIG. 29(A) illustrates the pressurization unit performing a first operation whereas FIG. 29(B) illustrates the pressurization unit performing a second operation.
[FIG. 30] FIG. 30 illustrates a configuration of an actuator unit according to another embodiment.

### DESCRIPTION OF EMBODIMENTS

Embodiments of the present disclosure will be described below in detail with reference to the drawings. Note that the embodiments below are substantially preferred examples, and not intended to limit the scope of present disclosure, or scope of the applications and use of the present disclosure.

### «Embodiment 1 »

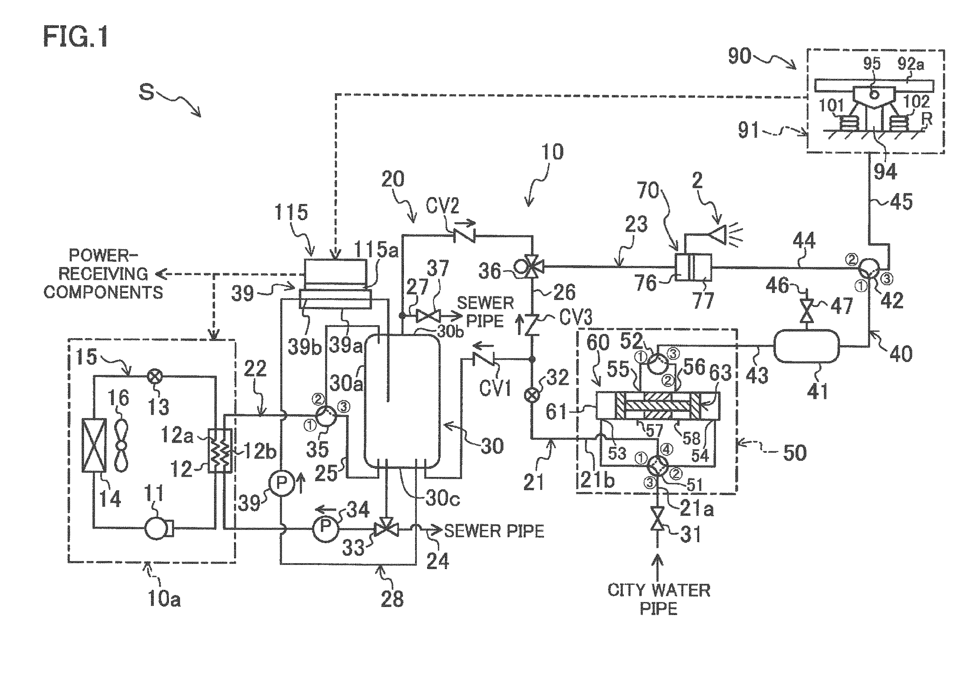

Embodiment 1 of the present disclosure is now described. A hot water supply system (S) according to Embodiment 1 is applied to a general house. As shown in FIG. 1, the hot water supply system (S) includes a hot water supply unit (10) configured to supply hot water to predetermined utilization points, and a solar power generation unit (90) configured to generate electricity from sunlight.

### <Hot Water Supply Unit>

The hot water supply unit (10) is a water supply system for supplying city water to the utilization points, and constitutes a water heater of the so-called heat pump type. The hot water supply unit (10) heats water flowing from a water pipe that is a water source, and supplies the hot water to utilization points such as a shower (2) and a bathtub (not shown). The hot water supply unit (10) includes a heat source unit (10a) serving as a heat source for heating water, and a water channel (20) provided in piping through which city water flows, and a hot water tank (30) in which hot water is stored.

The heat source unit (10a) includes a compressor (11), a water heat exchanger (12), an expansion valve (13), and an outdoor heat exchanger (14). In the heat source unit (10a), the component devices (11, 12, 13, 14) and refrigerant piping through which the component devices (11, 12, 13, 14) are connected to one another form a refrigerant circuit (15) where a refrigerating cycle is performed. The refrigerant circuit (15) is filled with carbon dioxide serving as a refrigerant. The so-called supercritical cycle in which the refrigerant is compressed so that its pressure becomes equal to or higher than the critical pressure is performed in the refrigerant circuit (15).

The compressor (11) is constituted by, e.g., a scroll compressor. The compressor (11) is an inverter type compressor whose revolution speed (frequency of operation) is variable. The water heat exchanger (12) includes a first inner channel (12a) and a second inner channel (12b). The first inner channel (12a) is connected to the refrigerant circuit (15), and the second inner channel (12b) is connected to the water channel (20). In the water heat exchanger (12), heat is exchanged between the refrigerant flowing through the first inner channel (12a) and water flowing through the second inner channel (12b). The expansion valve (13) is constituted by an electronic expansion valve whose degree of opening is adjustable.

The outdoor heat exchanger (14) is installed outdoors. The outdoor heat exchanger (14) is, e.g., a fin-and-tube heat exchanger. An outdoor fan (16) is provided near the outdoor heat exchanger (14). In the outdoor heat exchanger (14), heat is exchanged between outdoor air blown by the outdoor fan (16) and the refrigerant.

The hot water tank (30) is made of a vertically oriented, hollow, and sealed container. The hot water tank (30) includes a cylindrical barrel (30a), a top portion (30b) closing an upper end of the barrel (30a), and a bottom portion (30c) closing a lower end of the barrel (30a).

The water channel (20) has an inflow end connected to the water pipe and an outflow end connected to the utilization points such as the shower (2). The outflow end of the water channel (20) branches into a plurality of branch pipes, one of which is also connected to the bathtub (not shown). The water channel (20) includes a feed-water channel (21), a heating circulation channel (22), and a supply channel (23).

The feed-water channel (21) is a channel configured to supply city water flowing from the side adjacent to the city water pipe to the hot water tank (30). The feed-water channel (21) has an inflow end leading to the city water pipe and an outflow end leading to the inside of the hot water tank (30). A pipe at the outflow end of the feed-water channel (21) passes through bottom portion (30c) of the hot water tank (30) to enter the hot water tank (30) and has an opening located near the bottom portion (30c) of the hot water tank (30). A cut-off valve (31), an air compression unit (50), a pressure-reducing valve (32), and a first check valve (CV1) are connected to the feed-water channel (21) in this order, in the upstream-to-downstream direction of flow of water.

The cut-off valve (31) is an on-off valve capable of preventing the water from flowing. The air compression unit (50) is configured to compress air by utilizing the pressure of city water. The structure of the air compression unit (50) will be described later in detail. The pressure-reducing valve (32) constitutes a pressure reduction mechanism that reduces the pressure of city water. This pressure reduction mechanism causes, in the water channel (20), the downstream side of the pressure-reducing valve (32) to have a pressure (e.g., a pressure of 0.17 MPa) lower than a pressure (e.g., a pressure of 0.5 MPa) of the upstream side of the pressure-reducing valve (32), thereby ensuring that the hot water tank (30) resists pressure. Specifically, the pressure-reducing valve (32) reduces the pressure of city water in a side adjacent to the hot water tank (30) to prevent the internal pressure of the hot water tank (30) from exceeding a predetermined pressure resistance limit. The first check valve (CV1) allows a water flow in the direction (indicated by the arrows in FIG. 1) from the pressure-reducing valve (32) to the hot water tank (30) and blocks a water flow in the direction opposite to the above direction.

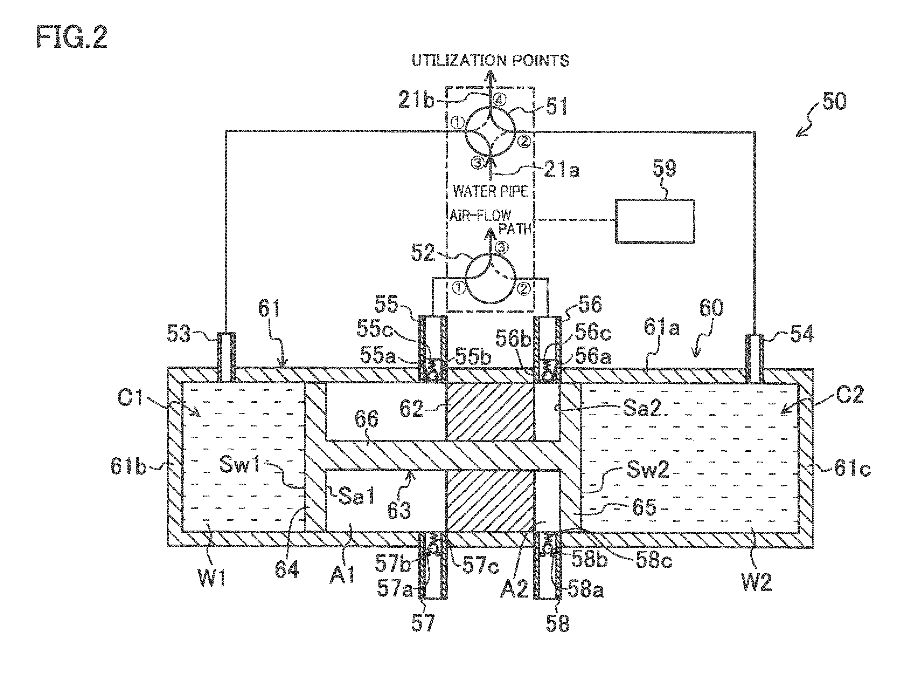

As shown in FIG. 2, the air compression unit (50) includes a water channel switcher (51), an air-flow path switcher (52), a valve controller (59), and an air compressor (60).

The water channel switcher (51) is constituted by a four-way valve having first to fourth ports. In the water channel switcher (51), the first port is connected to a first water port (53) of the air compressor (60), the second port is connected to a second water port (54) of the air compressor (60), the third port is connected to the city water pipe through the cut-off valve (31), and the fourth port is connected to the feed-water channel (21). The water channel switcher (51) is switchable between a first state (indicated by the solid lines in FIG. 2) and a second state (indicated by the dashed lines in FIG. 2). In the first state, the first port communicates with the third port whereas the second port communicates with the fourth port. In the second state, the first port communicates with the fourth port whereas the second port communicates with the third port.

The air-flow path switcher (52) is constituted by a three-way valve having first to third ports. In the air-flow path switcher (52), the first port is connected to a first discharge port (55) of the air compressor (60), the second port is connected to a second discharge port (56) of the air compressor (60), and the third port is connected to an air-flow path (40). The air-flow path switcher (52) is switchable between a first state (indicated by the solid line in FIG. 2) and a second state (indicated by the dashed line in FIG. 2). In the first state, the first port communicates with the third port whereas the second port is blocked. In the second state, the second port communicates with the third port whereas the first port is blocked.

The valve controller (59) is configured to control the water channel switcher (51) and the air-flow path switcher (52). Specifically, the valve controller (59) controls the water channel switcher (51) and the air-flow path switcher (52) such that the air compressor (60) is switched between a first operation and a second operation. More specifically, the valve controller (59), in the first operation, causes the water channel switcher (51) and the air-flow path switcher (52) to enter the respective first states. The valve controller (59), in the second operation, causes the water channel switcher (51) and the air-flow path switcher (52) to enter the respective second states. The first and second operations will be described in detail later.

The air compressor (60) of Embodiment 1 includes a cylinder member (61) having a cylindrical shape and a piston member (63) accommodated in the cylinder member (61) and capable of reciprocating. The cylinder member (61) has a hollow cylindrical shape. The cylinder member (61) includes a cylindrical barrel (61a), a first closer (61b) closing an axial end of the cylindrical barrel (61a), and a second closer (61c) closing the other axial end of the cylindrical barrel (61a).

A partition (62) is provided at an intermediate point of the inside of the cylinder member (61). The partition (62) partitions the inside of the cylinder member (61) into a first cylinder chamber (C1) adjacent to the first closer (61b) and a second cylinder chamber (C2) adjacent to the second closer (61 c).

The piston member (63) has a first piston portion (64) accommodated in the first cylinder chamber (C1), a second piston portion (65) accommodated in the second cylinder chamber (C2), and a piston rod (66) through which the piston portions (64, 65) are coupled. The first piston portion (64) and the second piston portion (65) are each formed in a disk shape, and have the same outside diameter. The piston rod (66) passes through a through hole (62a) formed in the partition (62) and couples the piston portions (64, 65) to each other. The piston rod (66) has a diameter smaller than the diameters of the piston portions (64, 65) and extends coaxially with the axis of the cylinder member (61) in the axial direction.

The first piston portion (64) divides the first cylinder chamber (C1) into a first water chamber (W1) and a first air chamber (A1). The first water chamber (W1) is located between the first closer (61b) and the first piston portion (64). The first air chamber (A1) is located between the first piston portion (64) and the partition (62). In other words, in the first cylinder chamber (C1), the first air chamber (A1) is located nearer the partition (62) than the first water chamber (W1) is.

The second piston portion (65) divides the second cylinder chamber (C2) into a second water chamber (W2) and a second air chamber (A2). The second water chamber (W2) is located between the second closer (61c) and the second piston portion (65). The second air chamber (A2) is located between the second piston portion (65) and the partition (62). In other words, in the second cylinder chamber (C2), the second air chamber (A2) is located nearer the partition (62) than the second water chamber (W2) is.

The first water port (53) is connected to the first water chamber (W1). The first discharge port (55) and a first suction port (57) are connected to the first air chamber (A1). The second water port (54) is connected to the second water chamber (W2). The second discharge port (56) and a second suction port (58) are connected to the second air chamber (A2). An inflow end of each of the first suction port (57) and the second suction port (58) opens into indoor or outdoor air (the atmosphere), for example.

A valve seat (57a), a ball valve (57b), and a spring (57c) are provided in the first suction port (57), and a valve seat (58a), a ball valve (58b), and a spring (58c) are provided in the second suction port (58). The ball valves (57b, 58b) are located nearer the respective inflow sides than the valve seats (57a, 58a) are, and urged by the springs (57c, 58c) toward the valve seats (57a, 58a), respectively. The valve seats (57a, 58a), the ball valves (57b,58b), and the springs (57c, 58c) constitute cut-off valves that prevent air in the air chambers (A1, A2) from flowing out of the cylinder member (61) through the suction ports (57, 58).

A valve seat (55a), a ball valve (55b), and a spring (55c) are provided in the first discharge port (55), and a valve seat (56a), a ball valve (56b), and a spring (56c) are provided in the second discharge port (56). The ball valves (55b, 56b) are located nearer the respective outflow sides than the valve seats (55a, 56a) are, and urged by the springs (55c, 56c) toward the valve seats (55a, 56a), respectively. The valve seats (55a, 56a), the ball valves (55b, 56b), and the springs (55c, 56c) constitute discharge valves that open the discharge ports (55, 56) when the internal pressures of the air chambers (A1, A2) becomes equal to or higher than respective predetermined pressures.

The first piston portion (64) includes a pressure-receiving face Sw1 that faces the first water chamber (W1) and has an area larger than that of a pressurizing face Sa1 facing the first air chamber (A1). The second piston portion (65) includes a pressure-receiving face Sw2 that faces the second water chamber (W2) and has an area larger than that of a pressurizing face Sa2 facing the second air chamber (A2). Specifically, regarding the first piston portion (64), the piston rod (66) is provided on the end face adjacent to the first air chamber (A1). Accordingly, in the first piston portion (64), the area of a portion facing the first water chamber (W1) (i.e., the area of the pressure-receiving face Sw1) is larger than the area of a portion facing the first air chamber (A1) (i.e., the area of the pressurizing face Sa1) by the area of an axially perpendicular section of the piston rod (66). In a similar manner, regarding the second piston portion (65), the piston rod (66) is provided on the end face adjacent to the second air chamber (A2). Accordingly, in the second piston portion (65), the area of a portion facing the second water chamber (W2) (i.e., the area of the pressure-receiving face Sw2) is larger than the area of a portion facing the second air chamber (A2) (i.e., the area of the pressurizing face Sa2) by the area of the axially perpendicular section of the piston rod (66).

The heating circulation channel (22) is a channel configured to heat water in the hot water tank (30) while causing the water to circulate. A pipe at an inflow end of the heating circulation channel (22) passes through bottom portion (30c) of the hot water tank (30) to enter the hot water tank (30) and has an opening located near the bottom portion (30c). A pipe at an outflow end of the heating circulation channel (22) passes through the top portion (30b) of the hot water tank (30) to enter the hot water tank (30) and has an opening located near the top portion (30b). In the hot water tank (30), the inflow end of the heating circulation channel (22) is located lower than the outflow end of the heating circulation channel (22).

A three-way drain valve (33), a first circulating pump (34), and a three-way valve (35) are connected to the heating circulation channel (22) in this order, in the upstream-to-downstream direction of flow of water. Further, the second inner channel (12b) of the water heat exchanger (12) is connected to the heating circulation channel (22) at a point between the first circulating pump (34) and the three-way valve (35).

The three-way drain valve (33) includes three ports. Two of the ports lead to the heating circulation channel (22), and the other is connected to a drain channel (24). The drain channel (24) leads to a sewer pipe. The three-way drain valve (33) is normally kept in a state where the heating circulation channel (22) is opened. The first circulating pump (34) is a centrifugal water pump or a positive-displacement water pump, for example.

The three-way valve (35) includes first to third port. In the three-way valve (35), the first port leads to an upstream side of the heating circulation channel (22), the second port leads to a downstream side of the heating circulation channel (22), and the third port leads to a bypass (25). The three-way valve (35) is switchable between a state (indicated by the solid line in FIG. 1) in which the first port communicates with the second port whereas the third port is blocked, and another state (indicated by the dashed line in FIG. 1) in which the second port communicates with the third port whereas the first port is blocked. A pipe at an outflow end of the bypass (25) passes through the bottom portion (30c) of the hot water tank (30) to enter the hot water tank (30) and has an opening located near the bottom portion (30c).

The supply channel (23) is a channel configured to supply hot water stored in the hot water tank (30) to the utilization points such as the shower (2). An inflow end of the supply channel (23) communicates with the inside of the hot water tank (30). An outflow end of the hot water tank (30) communicates with the shower (2) through a pressurization unit (70). The outflow end of the supply channel (23) branches into a plurality of branch pipes (not shown) that are also connected to utilization points (e.g. the bathtub) other than the shower (2).

A second check valve (CV2) and a hot water mixing valve (36) are connected to the supply channel (23) in this order, in the upstream-to-downstream direction of flow of water. The second check valve (CV2) allows water flow in the direction (indicated by the arrows in FIG. 1) from the hot water tank (30) to the hot water mixing valve (36) and blocks water flow in the direction opposite to the above direction.

The hot water mixing valve (36) includes three ports. Two of the ports lead to the supply channel (23), and the other is connected to an end of a branch channel (26). The other end of the branch channel (26) leads to the downstream side of the pressure-reducing valve (32) provided in the feed-water channel (21). A third check valve (CV3) is provided in the branch channel (26). The third check valve (CV3) allows water flow in the direction (indicated by the arrows in FIG. 1) from the feed-water channel (21) to the hot water mixing valve (36) and blocks water flow in the direction opposite to the above direction. The hot water mixing valve (36) is capable of adjusting the degree of opening of each of its ports. The hot water mixing valve (36) accordingly can regulate amounts (a mixing ratio) of water sent from the feed-water channel (21) and hot water sent from the hot water tank (30) to be mixed together. The temperature of water supplied from the supply channel (23) to the shower (2) can be adjusted by regulating the mixing ratio.

An end of a relief channel (27) is connected to the supply channel (23) at a point located upstream of the second check valve (CV2). The other end of the relief channel (27) leads to the sewer pipe. A relief valve (37) is connected to the relief channel (27). The relief valve (37) keeps the pressure in the hot water tank (30) equal to or lower than a predetermined value. Specifically, water evaporation sometimes causes an excessive increase in the internal pressure of the hot water tank (30). When the internal pressure of the hot water tank (30) exceeds a predetermined pressure (e.g. a pressure of 0.19 MPa) in this manner, the relief valve (37) is temporally opened. Consequently, the water vapor contained in the hot water tank (30) is discharged to the sewer pipe, resulting in that the internal pressure of the hot water tank (30) is kept equal to or less than the predetermined pressure.

The water channel (20) further includes a cooling circulation channel (28). The cooling circulation channel (28) is a channel configured to cool heat-producing components (which will be described in detail later) of a power conditioner (115) while causing water of the hot water tank (30) to circulate. A pipe at an inflow end of the cooling circulation channel (28) passes through the bottom portion (30c) of the hot water tank (30) to enter the hot water tank (30) and has an opening located near the bottom portion (30c). A pipe at an outflow end of the cooling circulation channel (28) passes through the top portion (30b) of the hot water tank (30) to enter the hot water tank (30) and extends in the inside of the hot water tank (30). The outflow end of the hot water tank (30) is located at an intermediate point in an axial direction (i.e., an intermediate point of the height) of the hot water tank (30). In the hot water tank (30), the inflow end of the cooling circulation channel (28) is located lower than the outflow end of the cooling circulation channel (28), and the inflow end of the cooling circulation channel (28) is located lower than the outflow end of the heating circulation channel (22).

A second circulating pump (38) and a water jacket (39) are connected to the cooling circulation channel (28) in this order, in the upstream-to-downstream direction of flow of water. The second circulating pump (38) is a centrifugal water pump or a positive-displacement water pump, for example.

The water jacket (39) constitutes a cooling portion that cools the heat-producing components of the power conditioner (115) by using water flowing through the cooling circulation channel (28). The water jacket (39) includes a jacket portion (39a) serving as a thermal conductive member and a cooling water channel (39b) located in the jacket portion (39a). The jacket portion (39a) has, e.g., a flat rectangular column shape and is made of a highly thermally conductive material such as aluminum. In the jacket portion (39a), an end face lying perpendicularly to the thickness direction of the jacket portion (39a) is in contact with an insolation portion (115a) for the heat-producing components of the power conditioner (115). The cooling water channel (39b) is connected to the cooling circulation channel (28).

The hot water supply unit (10) includes the air-flow path (40), an accumulator tank (41), a three-way switching mechanism (42), and the pressurization unit (70). The air-flow path (40) is a channel through which air compressed by the air compression unit (50) flows. The air-flow path (40) includes a main air supply path (43), a first air supply path (44), and a second air supply path (45). The main air supply path (43) has an inflow end communicating with a discharge side of the air compression unit (50), and an outflow end connected to a first port of the three-way switching mechanism (42). The first air supply path (44) has an inflow end connected to a second port of the three-way switching mechanism (42), and an outflow end connected to the pressurization unit (70). The second air supply path (45) has an inflow end connected to a third port of the three-way switching mechanism (42), and an outflow end communicating with a side adjacent to air bags (101, 102) of the solar power generation unit (90).

The accumulator tank (41) is connected to the main air supply path (43). The accumulator tank (41) is a sealed hollow container where air having been compressed by the air compression unit (50) is stored. An end of an air relief path (46) is connected to the accumulator tank (41). The other end of the air relief path (46) opens into the atmosphere. The air relief path (46) is provided with an air relief valve (47) that is opened or closed to keep the pressure in the accumulator tank (41) equal to a predetermined pressure.

The three-way switching mechanism (42) includes the first to third ports and performs switching of flow in the air-flow path (40). The three-way switching mechanism (42) is switchable between a state (indicated by the solid line in FIG. 1) in which the first port communicates with the second port whereas the third port is blocked, and another state (indicated by the dashed line in FIG. 1) in which the first port communicates with the third port whereas the second port is blocked.

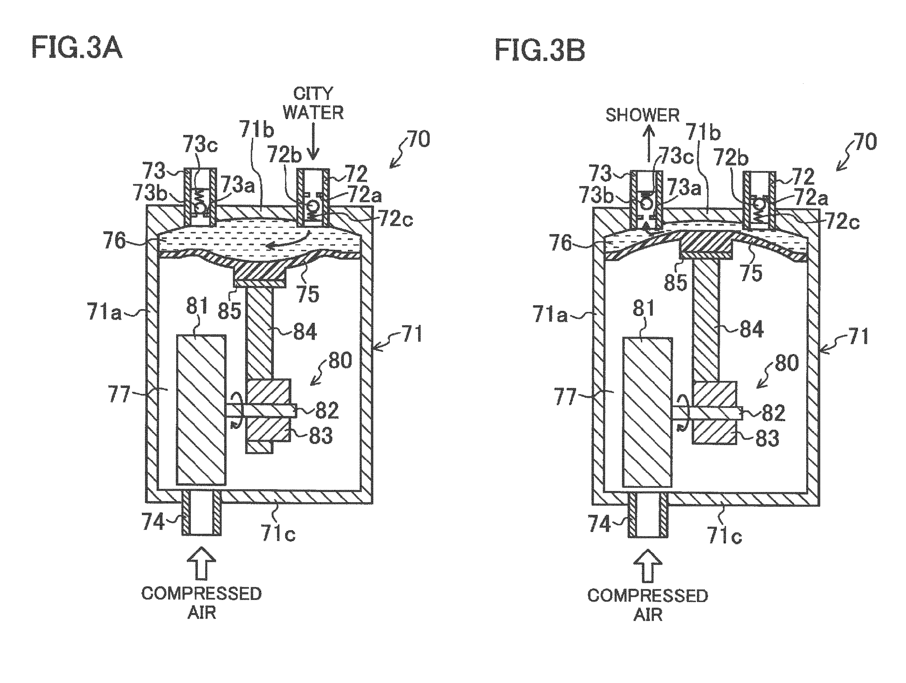

The pressurization unit (70) pressurizes water to be discharged by the shower (2), by using compressed air as a driving source. The pressurization unit (70) has a diaphragm pressurization mechanism. As shown in FIG. 3(A) and FIG. 3(B), the pressurization unit (70) includes a hollow-box type casing (71). The casing (71) includes a cylindrical case body (71a), a first wall (71b) closing an end of the case body (71a), and a second wall (71c) closing the other end of the case body (71 a).

A water suction port (72) and a water discharge port (73) are connected to the first wall (71b). An inflow end of the water suction port (72) is connected to the supply channel (23) of the hot water supply unit (10). An outflow end of the water suction port (72) passes through the first wall (71b) to reach the inside of the casing (71). An inflow end of the water discharge port (73) passes through the first wall (71b) to reach the inside of the casing (71). An outflow end of the water discharge port (73) is connected to the inflow end of the shower (2).

An air suction port (74) is connected to the second wall (71c). An inflow end of the air suction port (74) is connected to the first air supply path (44). An outflow and of the air suction port (74) passes through the second wall (71 c) to reach the inside of the casing (71).

The pressurization unit (70) includes a diaphragm (75) and a diaphragm driving mechanism (80) that drives the diaphragm (75). The diaphragm (75) is provided in the casing (71) and located near the first wall (71b). The diaphragm (75) has a substantially bowl-like shape of which a central portion is more flexible than a circumferential portion. The outer rim of the diaphragm (75) is fixed on the inner wall of the case body (71a), resulting in that the inner space of the casing (71) is divided into a water-pressurizing chamber (76) and an air-introducing chamber (77). The water-pressurizing chamber (76) is located between the diaphragm (75) and the first wall (71b), and communicates with the water suction port (72) and the water discharge port (73). The air-introducing chamber (77) is located between the diaphragm (75) and the second wall (71 c), and communicates with the air suction port (74). The casing (71) has a vent (not shown) through which compressed air having flowed into the air-introducing chamber (77) is discharged out of the casing (71).

The diaphragm driving mechanism (80) is accommodated in the air-introducing chamber (77). The diaphragm driving mechanism (80) includes an impeller (81), an output shaft (82), and a motion translation mechanism (83), a driven rod (84), and a fixture (85). The impeller (81) is located near the outflow end of the air suction port (74). The impeller (81) is rotated by compressed air discharged from the air suction port (74). The output shaft (82) is coupled to the axis of the impeller (81) and rotatably supported by a bearing (not shown). The motion translation mechanism (83) is configured to translate rotational motion of the output shaft (82) into linear reciprocating motion of the driven rod (84). The motion translation mechanism (83) may be any of various translation mechanism, such as Scotch yoke mechanism. The driven rod (84) is driven by the output shaft (82) to reciprocate in an axial direction of the case body (71a). The fixture (85) has an end face to which an end of the driven rod (84) is fixed, and the other end face to which a center portion of the diaphragm (75) is fixed. With this configuration, the reciprocating motion of the driven rod (84) causes the fixture (85) and the center portion of the diaphragm (75) to move. Consequently, the shape of the diaphragm (75) changes as shown in FIGS. 3(A) and 3(B), and the water-pressurizing chamber (76) varies in volume, resulting in that a predetermined pressure is applied to water in the water-pressurizing chamber (76).

A valve seat (72a), a ball valve (72b), and a spring (72c) are provided in the water suction port (72). The ball valve (72b) is located nearer the outflow end than the valve seat (72a) is, and urged by the spring (72c) toward the valve seat (72a). The valve seat (72a), the ball valve (72b), and the spring (72c) function as a cut-off valve that prevents water from flowing from the shower (2) toward the supply channel (23).

A valve seat (73a), a ball valve (73b), and a spring (73c) are provided in the water discharge port (73). The ball valve (73b) is located nearer the inflow end than the valve seat (73a) is, and urged by the spring (73c) toward the valve seat (73a). The valve seat (73a), the ball valve (73b), and the spring (73c) constitute a discharge valve that opens the water discharge port (73) when the internal pressure of the water-pressurizing chamber (76) becomes equal to or higher than a predetermined pressure.

### < Solar Power Generation Unit>

The solar power generation unit (90) includes a solar panel unit (91) configured to generate direct-current power from sunlight, a mounting unit (160) used for mounting the solar panel unit (91) on, e.g., a roof (R), and the power conditioner (115) configured to convert the direct-current power generated by the solar panel unit (91) into alternating-current power.

The solar panel unit (91) includes a plurality of solar panels (92a, 92b) and a solar panel driving mechanism (93).

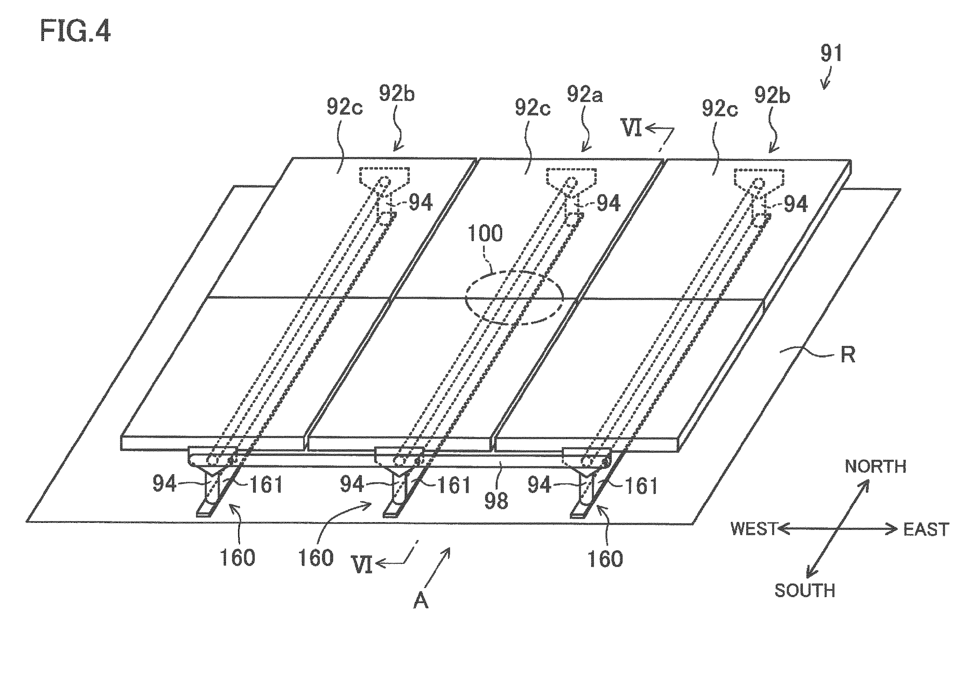

As show in FIG. 4, the plurality of the solar panels (92a, 92b) is installed in alignment on the roof (R) of a general house. Each of the solar panels (92a, 92b) is formed in a substantially plate shape, and has a light-receiving face (92c) formed on its upper side. The solar panels (92a, 92b) generate direct-current power by receiving sunlight with the light-receiving faces (92c).

The solar panel driving mechanism (93) drives and directs the solar panels (92a, 92b) toward sunlight. The solar panel driving mechanism (93) includes a plurality of pillars (94, 94, ...). The pillars (94) are fixed on the roof (R) by means of the mounting unit (160), and support the solar panels (92a, 92b) in a rotatable manner. The configuration of the solar panel driving mechanism (93) will be described in detail later.

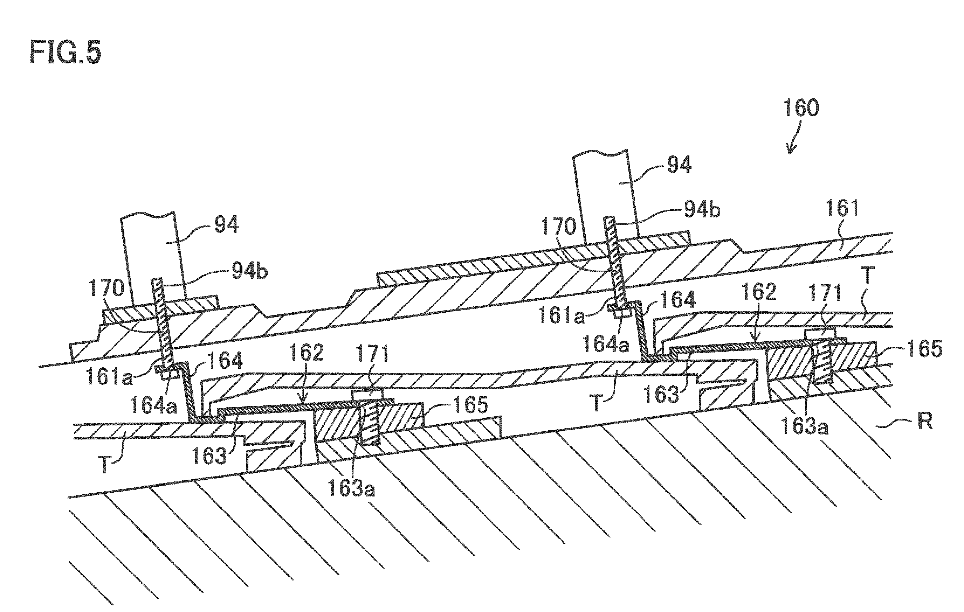

The mounting unit (160) is used to mount the solar panels (92a, 92b) and the solar panel driving mechanism (93) on the roof (R). Specifically, as shown in FIGS. 4 and 5, the mounting unit (160) includes a plurality of rack members (161, 161, ...) and a plurality of metal fittings (162, 162, ...).

The rack members (161) are used to arrange the solar panels (92a, 92b) in alignment on the roof (R). The rack members (161) that are made of relatively lightweight metal materials such as aluminum and formed in a linear shape are installed such that the rack members (161) extend along the slant of the roof (R) in a substantially north-south direction. The rack members (161) are arranged at regular intervals and parallel to one another. Each of the rack members (161) has through holes (161a) through which screws (170) pass. The through holes (161a) vertically extend and are arranged at regular intervals in each of the rack members (161).

The metal fittings (162) constitute mounting members for mounting the rack members (161) on the roof (R). A mounting portion (163) formed in a flat plate shape and a support portion (164) extending from an end of the mounting portion (163) substantially perpendicularly to the mounting portion (163) integrally form each of the metal fittings (162). An end portion of the support portion (164) is bent oppositely to the mounting portion (163). An end portion of the mounting portion (163) has a through hole (163a) through which a screw (171) passes. The end portion of the support portion (164) also has a through hole (164a) through which the screw (170) passes. The mounting portion (163) of each of the metal fittings (162) is positioned in a space between the roof (R) and a tile (T), and fastened with the screw (171) to a pedestal (165) that is fixed on the roof (R) in such a manner that the associated support portion (164) extends upwards.

The power conditioner (115) illustrated in FIG. 1 converts direct-current power generated by the solar panels (92a, 92b) into alternating-current power and sends the alternative-current power to a predetermined power-receiving component. The power conditioner (115) includes, e.g., an inverter circuit, a filter circuit, and a step-up circuit, and multiple power devices (e.g. switching elements) and reactive components constitute the heat-producing components. The power conditioner (115) is provided with the insolation portion (115a) configured to dissipate heat produced by the heat-producing components. The insolation portion (115a) is in contact with the water jacket (39).

### <Configuration of Solar Panel Driving Mechanism>

As described above, the solar panel driving mechanism (93) is configured to drive and direct the solar panels (92a, 92b) to sunlight. As illustrated in FIGS. 4-7, the solar panel driving mechanism (93) includes the plurality of the pillars (94, 94, ...), a plurality of rotation shafts (95, 95, ...), a plurality of mounting plates (96, 96, ..., 97, 97, ...), and an actuator unit (100). Each of the solar panels (92a, 92b) is associated with a pair of the pillars (94) supporting the solar panel (92a, 92b), the rotation shaft (95) rotatably supported by the pair of the pillars (94), and four mounting plates (96, 97) coupled to the solar panel (92a, 92b).

Each of the pillars (94) is a rectangular pillar of which the height is greater than the width. The pillars (94) constitute support members supporting the solar panels (92a, 92b) through the rotation shafts (95). The lower end of each pillar (94) has an axially extending screw hole (94b) into which the screw (170) is fastened. The pair of pillars (94, 94) stands on the roof (R) with a predetermined distance therebetween. Specifically, the screw hole (94b) of each the pillars (94, 94) constituting the pair coincides with both of the associated through hole (161 a) of the rack member (161) and the through hole (164a) of the associated metal fitting (162) included in the mounting units (160), and the screw (170) fastens each of the pillars (94, 94). In this manner, the pair of the pillars (94, 94) can be fixed at predetermined positions on the roof (R) without misalignment. In addition, since the metal fittings (162) support the lower surfaces of the portion of the rack members (161) on which the pillars (94) are installed, deformation of the rack members (161) caused by loads of the pillars (94) can be reduced. Consequently, the rack members (161) can be made of a relatively lightweight material, and loads imposed on the roof (R) can be reduced.

The upper ends of the pillars (94) each have a bearing portion (94a) that supports an associated one of the rotation shafts (95) in a rotatable manner. The rotation shafts (95) each extend parallel to the roof (R) with both end portions supported by the associated pillars (94).

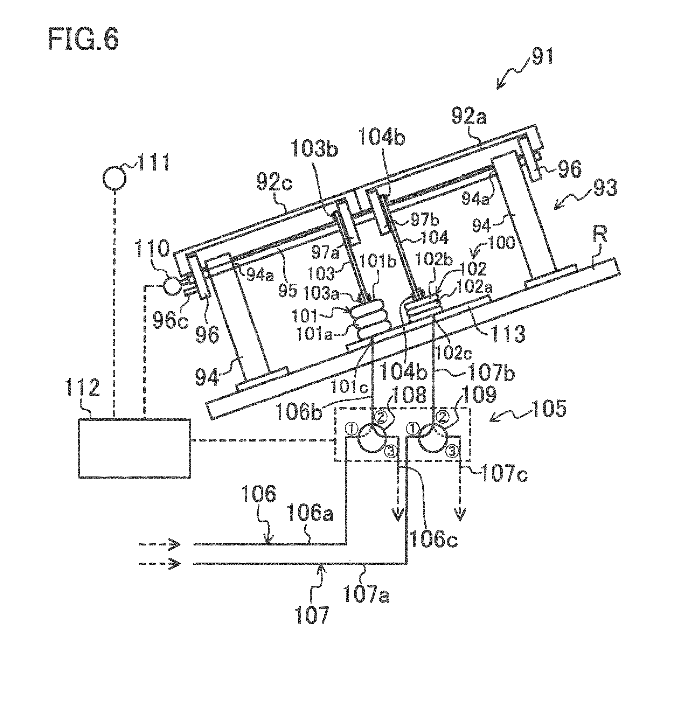

The four mounting plates (96, 97) are fixed to the lower surface of each of the solar panels (92a, 92b). Specifically, a pair of outer mounting plates (96) is provided on the outer sides of each pair of the pillars (94). These outer mounting plates include a first outer mounting plate (96a) located adjacent to the lower side (i.e., leftward in FIG. 6) and a second outer mounting plate (96b) located adjacent to the upper side (i.e. rightward in FIG. 6). A pair of inner mounting plates (97) is provided between the pillars (94) constituting each pair. These inner mounting plates (97) include a first inner mounting plate (97a) located adjacent to the lower side and a second inner mounting plate (97b) located adjacent to the upper side.

Each of the first outer mounting plates (96a) has a projection (96c) projecting in the axial direction of the rotation shaft (95). The projection (96c) is formed such that its tip is located outward relative to the side end of each of the solar panels (92a, 92b). The projection (96c) is spaced from the rotation shaft (95), viewed in the axial direction of the rotation shaft (95).

The actuator unit (100) includes a pair of the air bags (101, 102) and a pair of rod members (103, 104) coupled to the air bags (101, 102). The actuator unit (100) is provided in association with the solar panel (92a) included in the plurality of the solar panels (92a, 92b). Specifically, the actuator unit (100) of Embodiment 1 is mounted to the back surface of the solar panel (92a) that is the middle panel of the plurality of the solar panels (92a, 92b) arranged in the east-west direction (i.e., the side-to-side direction in FIG. 4). Hereinafter, the solar panel to which the actuator unit (100) is mounted may be referred to as the driving solar panel (92a), and the solar panels having no actuator unit mounted thereto (i.e., the panels located on both sides in FIG. 4) may be referred to as the driven solar panels (92b).

The pair of the air bags (101, 102) is provided on the upper face of a base (113) laid on the roof (R). The pair of the air bags (101, 102) include a first air bag (101) located below the first inner mounting plate (97a) and a second air bag (102) located below the second inner mounting plate (97b). The air bags (101, 102) are disposed in such a manner that the rotation shaft (95) supported by the pillars (94) is located between the air bags (101, 102). In this embodiment, the first air bag (101) is located west relative to the second air bag (102). Each of the air bags (101, 102) is made of a flexible and relatively lightweight material such as rubber, and has a hollow shape with a relatively thin wall.

The air bag (101) has a body (101a) which is capable of extending and contracting according to changes in the internal pressure of the air bag (101), and a reception portion (101b) that moves in a direction perpendicular to the driving solar panel (92a) in accordance with the extension and contraction of the body (101a). The air bag (102) has a body (102a) that extends or contracts according to changes in the internal pressure of the air bag (102), and a reception portion (102b) that moves in a direction perpendicular to the driving solar panel (92a) in accordance with the extension or contraction of the body (102a). Specifically, the reception portions (101b, 102b) move toward the driving solar panel (92a) when the respective bodies (101a, 102a) extend, and move toward the roof (R) when the respective bodies (101a, 102a) contract. The air bags (101, 102) have air supply/exhaust openings (101c, 102c), respectively. Each of the air supply/exhaust openings (101c, 102c) functions as an opening through which the inner space of the associated air bag (101, 102) communicates with the outside space.

The pair of the rod members (103, 104) include a first rod member (103) through which the first air bag (101) is coupled to the first inner mounting plate (97a), and a second rod member (104) through which the second air bag (102) is coupled to the second inner mounting plate (97b). Specifically, the first rod member (103) has a longitudinal end coupled to the upper end of the reception portion (101b) of the first air bag (101) through an axis portion (103a), and the other longitudinal end coupled to the first inner mounting plate (97a) through an axis portion (103b). In a similar manner, the second rod member (104) has a longitudinal end coupled to an upper end of the reception portion (102b) of the second air bag (102) through an axis portion (104a), and the other longitudinal end coupled to the second inner mounting plate (97b) through an axis portion (104b). The rod members (103, 104) are coupled in a rotatable manner relative to the respective air bags (102, 103) and the respective inner mounting plates (97a, 97b). This configuration enables the self weight of the driving solar panel (92a) acts on the air bags (102, 103) through the respective rod members (103, 104). In other words, the reception portions (101b, 102b) of the air bags (102, 103) support the back surface of the driving solar panel (92a). Thus, supporting the driving solar panel (92a) via the rod members (103, 104) enables the driving solar panel (92a) to rotate at a position spaced from the roof (R), thereby ensuring a region where the solar panels (92a, 92b) can rotate.

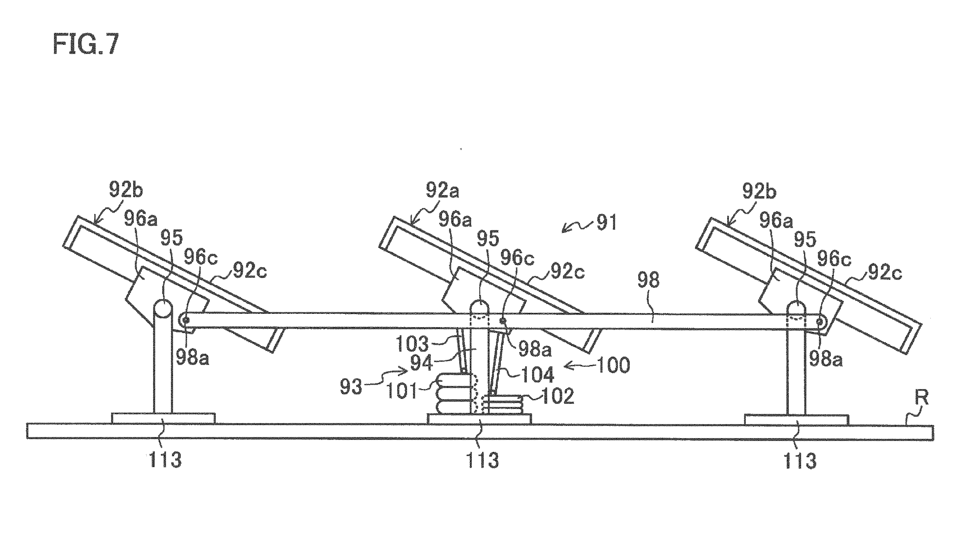

As illustrated in FIG. 7, the solar panel driving mechanism (93) includes a link member (98). The link member (98) constitutes a link mechanism that links the solar panels (92a, 92b) to one another such that the solar panels (92a, 92b) rotate by an identical angle.

The link member (98) linearly extends and links the side ends of the solar panels (92a, 92b) that are arranged in the east-west direction. The link member (98) has bearing holes (98a) formed at the positions corresponding to the projections (96c) of the first outer mounting plates (96a) mounted to the solar panels (92a, 92b). Each of the projections (96c) is caused to pass through an associated one of the bearing holes (98a). The bearing holes (98a) each have an inside diameter that allows the bearing holes (98a) to rotate relative to the respective projections (96c).

The solar panel driving mechanism (93) includes an air supply/exhaust mechanism (105) configured to vary the internal pressures of the air bags (101, 102). The air supply/exhaust mechanism (105) includes a first air bag side path (106) and a second air bag side path (107).

The first air bag side path (106) includes a first junction path (106a), a first air supply/exhaust path (106b), and a first discharge path (106c). The first air bag side path (106) further includes a first air supply/exhaust switching valve (108) having first to third ports. In a similar manner, the second air bag side path (107) includes a second junction path (107a), a second air supply/exhaust path (107b), and a second discharge path (107c). The second air bag side path (107) further includes a second air supply/exhaust switching valve (109) having first to third ports.

The first junction path (106a) has an inflow end connected to the second air supply path (45) of the hot water supply unit (10) and an outflow end connected to the first port of the first air supply/exhaust switching valve (108). The first air supply/exhaust path (106b) has an end connected to the second port of the first air supply/exhaust switching valve (108) and the other end connected to the air supply/exhaust opening (101c) of the first air bag (101). The first discharge path (106c) has an inflow end connected to the third port of the first air supply/exhaust switching valve (108) and an outflow end opening at an outdoor air side (i.e., an atmospheric pressure side).

The second junction path (107a) has an inflow end connected to the second air supply path (45) of the hot water supply unit (10) and an outflow end connected to the first port of the second air supply/exhaust switching valve (109). The second air supply/exhaust path (107b) has an end connected to the second port of the second air supply/exhaust switching valve (109) and the other end connected to the air supply/exhaust opening (102c) of the second air bag (102). The second discharge path (107c) has an inflow end connected to the third port of the second air supply/exhaust switching valve (109) and an outflow end opening at the outdoor air side (the atmospheric pressure side).

The air supply/exhaust mechanism (105) is configured to perform a first operation and a second operation in a switchable manner. Specifically, when the air supply/exhaust mechanism (105) performs the first operation, the two air supply/exhaust switching valves (108, 109) enter a first state (indicated by the solid lines in FIG. 6) in which the respective first and second ports communicate with each other whereas the respective third ports are blocked. On the other hand, when the air supply/exhaust mechanism (105) performs the second operation, the two air supply/exhaust switching valves (108, 109) enter a second state (indicated by the dashed lines in FIG. 6) in which the respective second and third ports communicate with each other whereas the respective first ports are blocked.

The solar panel driving mechanism (93) includes an angle sensor (110), an insolation sensor (111), and a solar panel controller (112). The angle sensor (110) is mounted to an end of the rotation shaft (95) and senses an angle at which the solar panel (92a) is positioned. The insolation sensor (111) senses the azimuth of the sun. The solar panel controller (112) adjusts the angle of the solar panel (92a) on the basis of the values sensed by the angle sensor (110) and the insolation sensor (111). Specifically, the solar panel controller (112) is configured to switch the air supply/exhaust switching valves (108, 109) according to the sensed values.

### - Operation -

### <Basic operation>

When the hot water supply system (S) is in operation, water flowing from the city water pipe is appropriately supplied to the hot water tank (30) and the water of the hot water tank (30) is appropriately heated. The hot water in the hot water tank (30) is appropriately supplied to the utilization points such as the shower (2). This basic operation of the hot water supply system (S) is now described in detail with reference to FIG. 1.

When the hot water supply system (S) is in operation, water from the city water pipe is appropriately supplied to the hot water tank (30) through the feed-water channel (21). Specifically, water from the city water pipe passes through the air compression unit (50). At this time, the air compression unit (50) compresses air by means of the pressure of city water, and the compressed air is stored in the accumulator tank (41) (which will be described in detail later). The pressure of the water having passed through the air compression unit (50) is then reduced by the pressure-reducing valve (32). The water with reduced pressure flows into the hot water tank (30). Thus, reducing the pressure of the water by the pressure-reducing valve (32) results in reduction of the internal pressure of the hot water tank (30), thereby sufficiently ensuring that the hot water tank (30) resists pressure.

The heat source unit (10a) appropriately heats the water of the hot water tank (30). Specifically, when heating the water of the hot water tank (30), the compressor (11) and the outdoor fan (16) are operated, and the opening degree of the expansion valve (13) is appropriately adjusted. In this manner, the refrigerating cycle is performed in the refrigerant circuit (15). Specifically, in this refrigerating cycle, the refrigerant having been compressed by the compressor (11) dissipates heat in the first inner channel (12a) of the water heat exchanger (12). After dissipating heat, the refrigerant is decompressed by the expansion valve (13) and then evaporates in the outdoor heat exchanger (14) to be sucked into the compressor (11).

During heating of the water, the first circulating pump (34) is operated and the three-way valve (35) is switched to enter the state indicated by the solid line in FIG. 1, thereby causing the water of the hot water tank (30) to flow into the heating circulation channel (22) to pass through the second inner channel (12b) of the water heat exchanger (12). In the water heat exchanger (12), heat of the refrigerant flowing through the first inner channel (12a) is transferred to the water flowing through the second inner channel (12b). In this manner, the water flowing through the second inner channel (12b) is heated to a predetermined temperature. The water having been heated in the second inner channel (12b) is returned to the hot water tank (30).

The hot water in the hot water tank (30) is supplied to the shower (2) and other utilization points, as appropriate. Specifically, when supplying the hot water of the hot water tank (30), the hot water mixing valve (36) causes the supply channel (23) to open, resulting in that the hot water of the hot water tank (30) is sent by means of the internal pressure of the tank (30) to pass through the hot water mixing valve (36). At this time, the hot water mixing valve (36) also adjusts the degree of opening of the port adjacent to the branch channel (26), as appropriate. In this manner, the hot water supplied from the hot water tank (30) and the (cold) water supplied from the branch channel (26) are mixed at a predetermined ratio to adjust the temperature of the water to be provided. The water whose temperature has been adjusted in this manner is sent to the shower (2) after having passed through the pressurization unit (70).

### <Operation by Air Compression Unit>

During the above basic operation, the air compression unit (50) compresses air by using the pressure of city water. This operation by the air compression unit (50) is now described with reference to FIGS. 2 and 10-12.

During operation by the air compression unit (50), a first operation in which air in the first air chamber (A1) is compressed and a second operation in which air in the second air chamber (A2) is compressed are alternately performed at predetermined intervals. In this manner, compressed air is continuously produced by the air compression unit (50). When the air compression unit (50) starts operating, either of the first and second operations is carried out. Here, a case where the first operation is initially carried out is described.

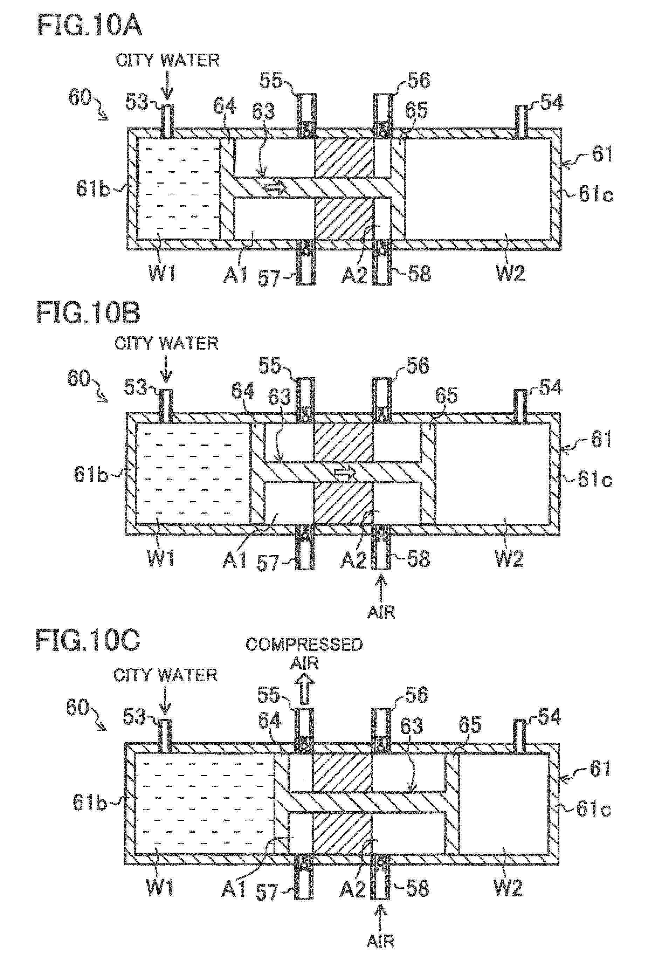

When the initial first operation is started, the water channel switcher (51) and the air-flow path switcher (52) enter the respective first states (i.e. the states indicated by the solid lines in FIG. 2). Consequently, the first water port (53) communicates with the side adjacent to the water pipe, and the second water port (54) communicates with the side adjacent to the utilization points (i.e. the side adjacent to the hot water tank (30)). At the same time, the first discharge port (55) communicates with the air-flow path (40). Before the start of this initial operation, the water chambers (W1, W2) contain no water. Therefore, upon start of the first operation, the first water chamber (W1) becomes filled with water flowing through the first water port (53) (see FIG. 10(A)). On the other hand, since the second water chamber (W2) is free of water, no water flows into the second water port (54).

In the state illustrated in FIG. 10(A), when further water flows from the first water port (53) into the first water chamber (W1), a water pressure acts on the pressure-receiving face Sw1 of the first piston portion (64) to cause the piston member (63) to move toward the second closer (61c) (see FIG. 10(B)). Consequently, the volume of the first air chamber (A1) gradually decreases and the air in the first air chamber (A1) is compressed. At this time, since the pressure-receiving face Sw1 of the first piston portion (64) is larger than the pressurizing face Sa1 for air of the first air chamber (A1), the pressure of the air in the first air chamber (A1) can be increased to exceed the pressure of the city water in the first water chamber (W1), according to Pascal's principle.

As the second piston portion (65) moves, together with the first piston portion (64), toward the second closer (61c), the volume of the second air chamber (A2) gradually increases. Consequently, air present outside the cylinder member (61) is sucked into the second air chamber (A2) through the second suction port (58).

When the pressure of the air in the first air chamber (A1) becomes equal to or higher than a predetermined pressure, the ball valve (55b) in the first discharge port (55) is opened. Consequently, the compressed air in the first air chamber (A1) is discharged to the air-flow path (40) through the first discharge port (55) (see FIG. 10(C)). The compressed air having been discharged to the air-flow path (40) is stored in the accumulator tank (41).

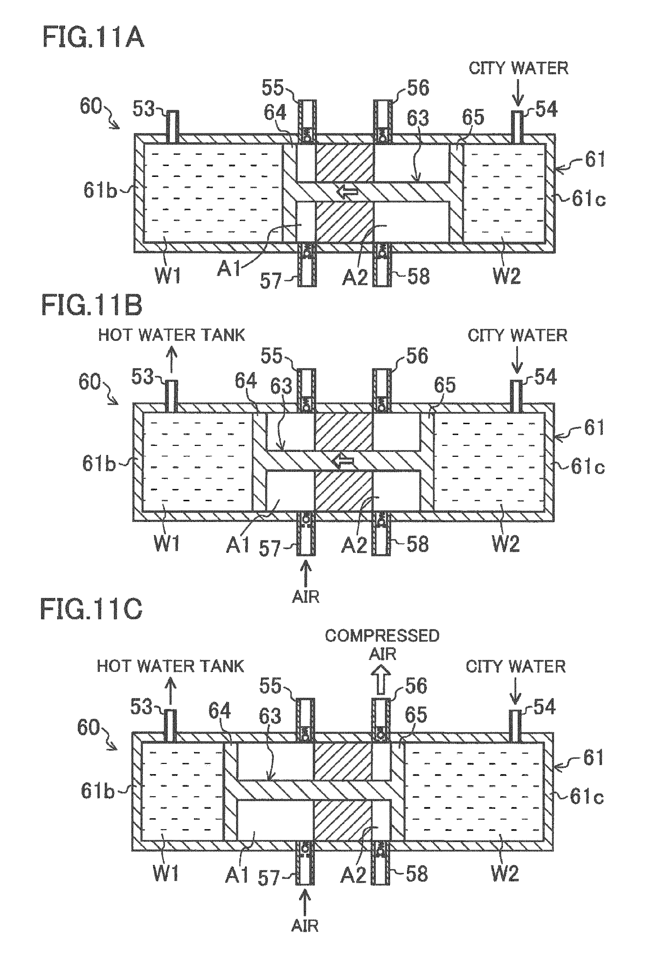

After a lapse of a predetermined time from the initial first operation, the second operation is performed. In the second operation, the water channel switcher (51) and the air-flow path switcher (52) enter the respective second states (indicated by the dashed lines in FIG. 2). Consequently, the second water port (54) communicates with the side adjacent to the water pipe, and the first water port (53) communicates with the side adjacent to the utilization points (i.e. the side adjacent to the hot water tank (30)). At the same time, the second discharge port (56) communicates with the air-flow path (40). Upon start of the second operation, the second water chamber (W2) becomes filled with water flowing through the second water port (54) (see FIG. 11(A)).

In the state illustrated in FIG. 11 (A), when further water flows from the second water port (54) into the second water chamber (W2), a water pressure acts on the pressure-receiving face Sw2 of the second piston portion (65) to cause the piston member (63) to move toward the first closer (61b) (see FIG. 11(B)). Consequently, the volume of the second air chamber (A2) gradually decreases and the air in the second air chamber (A2) is compressed. At this time, since the pressure-receiving face Sw2 of the second piston portion (65) is larger than the pressurizing face Sa2 for air of the second air chamber (A2), the pressure of the air in the second air chamber (A2) can be increased to exceed the pressure of the city water in the second water chamber (W2), according to Pascal's principle.

As the first piston portion (64) moves, together with and the second piston portion (65), toward the first closer (61b), the volume of the first water chamber (W1) gradually decreases and the first air chamber (A1) gradually increases. Consequently, the water in the first water chamber (W1) flows out through the first water port (53) to be supplied to the hot water tank (30) through the feed-water channel (21). At the same time, air present outside the cylinder member (61) is sucked into the first air chamber (A1) through the first suction port (57) (see FIG. 11 (B)).

When the pressure of the air in the second air chamber (A2) becomes equal to or higher than a predetermined pressure, the ball valve (56b) in the second discharge port (56) is opened. Consequently, the compressed air in the second air chamber (A2) is discharged to the air-flow path (40) through the second discharge port (56) (see FIG. 11 (C)). The compressed air having been discharged to the air-flow path (40) is stored in the accumulator tank (41).

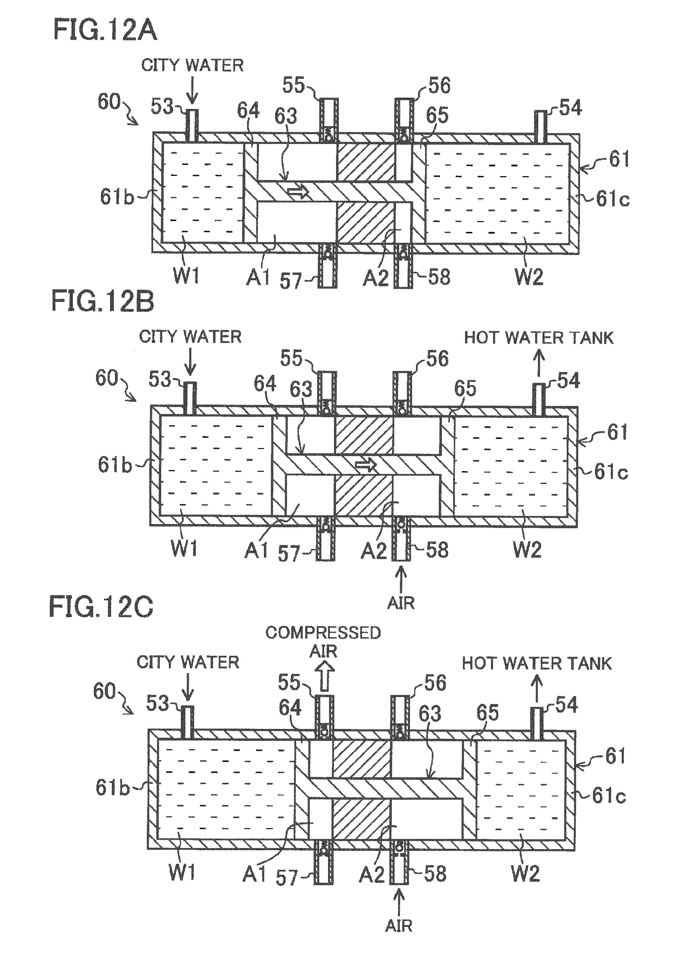

After a lapse of a predetermined time from the second operation, the first operation is performed again. Consequently, water flows from the first water port (53) into the first water chamber (W1), the piston member (63) moves toward the second closer (61c) (see FIGS. 12(A) and 12(B)). The air in the first air chamber (A1) is accordingly compressed and the water in the second water chamber (W2) is supplied to the hot water tank (30) through the second water port (54). At the same time, air present outside the cylinder member (61) is sucked into the second air chamber (A2).

When the pressure of the air in the first air chamber (A1) becomes equal to or higher than a predetermined pressure, the ball valve (55b) in the first discharge port (55) is opened. Consequently, the compressed air in the first air chamber (A1) is discharged to the air-flow path (40) through the first discharge port (55) (see FIG. 12(C)). The compressed air having been discharged to the air-flow path (40) is stored in the accumulator tank (41).

After the above described operation, the second operation illustrated in FIG. 11 and the first operation illustrated in FIG. 12 are alternately repeated. In this manner, the air compression unit (50) continuously supplies compressed air and city water to the accumulator tank (41) and the hot water tank (30), respectively.

### <Operation by Pressurization Unit >

As described above, in the hot water supply unit (10) of the hot water supply system (S), city water is supplied to the hot water tank (30) after the pressure of city water has been reduced by the pressure-reducing valve (32) functioning as the pressure reduction mechanism. This configuration prevents the internal pressure of the hot water tank (30) from increasing excessively even if the pressure of the city water is relatively high. Accordingly, it is possible to ensure that the hot water tank (30) resists pressure. On the other hand, reducing the pressure of city water by means of the pressure-reducing valve (32) could result in a reduced pressure of the water supplied to the shower (2) and the other utilization points. Thus, the above configuration could disadvantageously cause the pressure of water discharged through the shower (2) to decrease and make it impossible to supply water having a sufficient discharge pressure from the shower (2) to e.g., a user. In view of the foregoing, in the hot water supply unit (10) of Embodiment 1, the pressurization unit (70) is driven by means of air compressed by the air compression unit (50), and the pressurization unit (70) pressurizes water to be discharged from the shower (2).

Specifically, when the pressurization unit (70) is in operation, the three-way switching mechanism (42) enters in the state indicated by the solid line in FIG. 1 and thereby causes the first port to communicates with the second port. Accordingly, compressed air in the accumulator tank (41) is supplied to the pressurization unit (70). The compressed air flows into the air-introducing chamber (77) in the casing (71) through the air suction port (74) illustrated in FIG. 3.

The compressed air having flowed into the air-introducing chamber (77) rotates the impeller (81) and thereby rotates output shaft (82) coupled to the impeller (81). The motion translation mechanism (83) translates the rotational motion of the output shaft (82) into the linear reciprocating motion of the driven rod (84). In this manner, the driven rod (84) moves to the position illustrated in FIG. 3(A) and the position illustrated in FIG. 3(B) in an alternating manner. In accordance with this alternating movement, the diaphragm (75) coupled to the driven rod (84) takes on the shape illustrated in FIG. 3(A) and the shape illustrated in FIG. 3(B) in an alternating manner.

When diaphragm (75) changes its shape in the above manner, the water in the water-pressurizing chamber (76) is pressurized. Specifically, when the pressurization unit (70) being in the state illustrated in FIG. 3(B) enters the state illustrated in FIG. 3(A), the ball valve (72b) of the water suction port (72) is opened and water in the supply channel (23) is introduced into the water-pressurizing chamber (76) through the water suction port (72). When the pressurization unit (70) being in this state enters the state illustrated in FIG. 3(A) again, the volume of the water-pressurizing chamber (76) decreases, resulting in that the water in the water-pressurizing chamber (76) is pressurized. In this manner, the ball valve (73b) of the water discharge port (73) is opened when the water pressure of the water-pressurizing chamber (76) becomes equal to or higher than a predetermined pressure. Consequently, the pressurized water is supplied to the shower (2) through the water discharge port (73), and the water having a relatively high discharge pressure is supplied to, e.g., the user.

### <Operation by Solar Panel Unit>

In the solar panel unit (91), the angle of the solar panels (92a, 92b) is adjusted according to the angle of sunlight. In the hot water supply system (S), compressed air supplied from the air compression unit (50) is used as the driving force for the solar panels (92a, 92b). Operation by the solar panel unit (91) is now described with reference to FIGS. 1 and 6-9.

In the hot water supply system (S), in order to drive the solar panels (92a, 92b), the three-way switching mechanism (42) enters the state indicated by the dashed line in FIG. 1. Accordingly, the compressed air stored in the accumulator tank (41) is sent toward the air supply/exhaust mechanism (105) whereas the solar panel controller (112) controls the air supply/exhaust switching valves (108, 109) in accordance with the position (the direction) of the sun. More specifically, the angle sensor (110) senses an angle at which the solar panels (92a, 92b) are positioned, and the insolation sensor (111) senses the position (the direction) of the sun. The solar panel controller (112) calculates an angle by which the solar panels (92a, 92b) need to rotate based on the values sensed by the angle sensor (110) and the insolation sensor (111). The solar panel controller (112) controls the air supply/exhaust switching valves (108, 109) to cause the air bags (101, 102) to extend or contract such that the solar panels (92a, 92b) rotate by the calculated angle.

For example, let us suppose that the sun is east of the solar panels (i.e., on the upper right side in FIG. 7). In this case, the solar panel controller (112) controls the air supply/exhaust switching valves (108, 109) such that the reception portion (102b) of the second air bag (102) located east of the first air bag (101) is positioned lower than the reception portion (101b) of the first air bag (101). Specifically, the second air supply/exhaust switching valve (109) is caused to enter the second state, and accordingly, the second air supply/exhaust path (107b) comes into communication with the second discharge path (107c). Consequently, compressed air present in the second air bag (102) is discharged through the second discharge path (107c) to the atmosphere, and the second air bag (102) gradually contracts, resulting in that the reception portion (102b) of the second air bag (102) moves downward. At the same time, the first air supply/exhaust switching valves (108) is caused to enter the first state, and accordingly, the first junction path (106a) comes into communication with the first air supply/exhaust path (106b). Consequently, compressed air from the first junction path (106a) flows into the first air bag (101) to cause the first air bag (101) to extend gradually, thereby causing the reception portion (101b) of the first air bag (101) to move upward. Thus, the angle of the driving solar panel (92a) to which the actuator unit (100) is mounted is adjusted by controlling the heights of the reception portions (101b, 102b).

When the angle of the driving solar panel (92a) is adjusted in the above manner, the link member (98), which links the solar panels (92a, 92b) to one another, rotates the driven solar panels (92b) and positions the panels (92b) at the same angle as that of the driving solar panel (92a). Specifically, when the driving solar panel (92a) rotates, the rotational force is transmitted to the driven solar panels (92b) through the link member (98). In this manner, all of the solar panels (92a, 92b) are adjusted to be positioned at the angle as illustrated in FIG. 7.

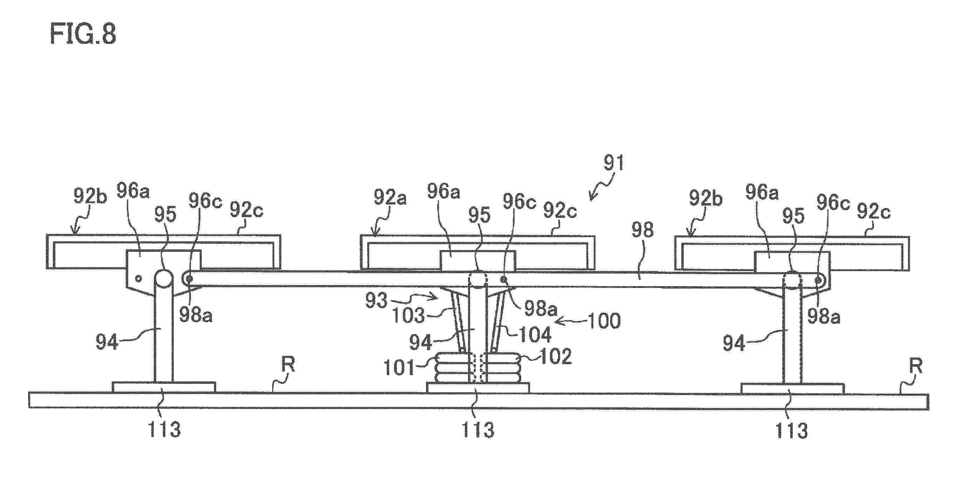

Let us now suppose that the sun is south of the solar panels (i.e., on the upper side in FIG. 8), for example. In this case, the solar panel controller (112) controls the air supply/exhaust switching valves (108, 109) such that the reception portion (101b) of the first air bag (101) and the reception portion (102b) of the second air bag (102) are positioned at the same height. Specifically, the first air supply/exhaust switching valve (108) and the second air supply/exhaust switching valve (109) are caused to enter the first or second state as appropriate, resulting in that the reception portions (101b, 102b) are moved to be positioned at the same height. Thus, all of the solar panels (92a, 92b) are adjusted and positioned at the angle as illustrated in FIG. 8, by controlling the heights of the reception portions (101b, 102b).

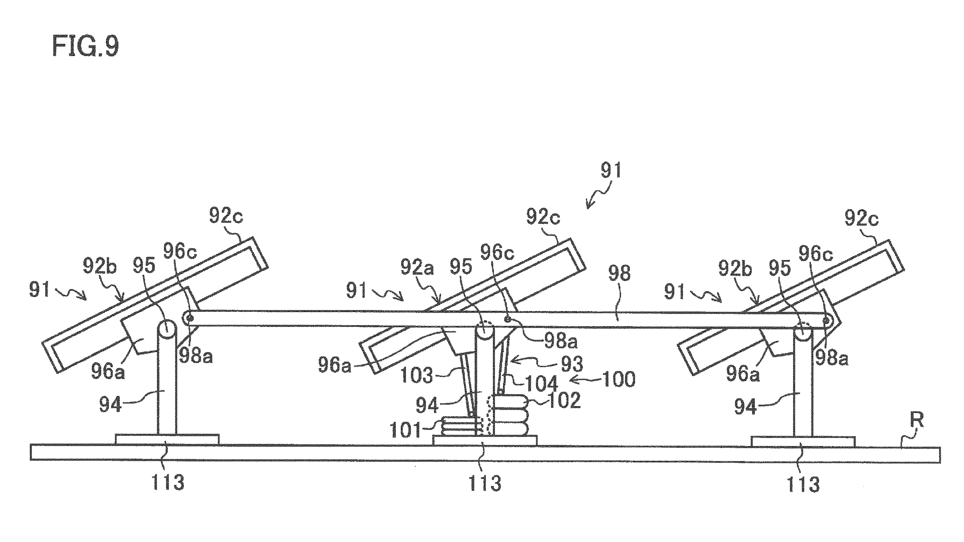

Let us suppose that the sun is west of the solar panels (i.e., on the upper left side in FIG. 9), for example. In this case, the solar panel controller (112) controls the air supply/exhaust switching valves (108, 109) such that the reception portion (101b) of the first air bag (101) is positioned lower than the reception portion (102b) of the second air bag (102). Specifically, the first air supply/exhaust switching valve (108) is caused to enter the second state whereas the second air supply/exhaust switching valve (109) is caused to enter the first state. Consequently, the first air bag (101) contracts and the reception portion (141b) moves downward. At the same time, the second air bag (102) extends and the reception portion (102b) moves upward. Thus, all of the solar panels (92a, 92b) are adjusted and positioned at the angle as illustrated in FIG. 9, by controlling the heights of the reception portions (101b, 102b).

The light-receiving faces (92c) of the solar panels (92a, 92b) receive sunlight in the above described manner, and the solar panels (92a, 92b) then produce direct-current power. The direct-current power is output to the power conditioner (115), which converts the direct-current power into alternating-current power. The alternating-current power output from the power conditioner (115) is supplied to the heat source unit (10a) and other power-receiving components.

At this time, in the power conditioner (115), the heat-producing components dissipate heat generated due to, e.g., switching of the switching elements. This heat is transferred to water flowing in the cooling water channel (39b) through the insolation portion (115a) and the jacket portion (39a). Consequently, the heat-producing components of the power conditioner (115) can be cooled. The water in the cooling water channel (39b) that has absorbed heat from the heat-producing components of the power conditioner (115) flows into the hot water tank (30). In this manner, the heat from the power conditioner (115) can be utilized to heat water of the hot water tank (30).

### - Advantages of Embodiment 1-

As described above, in the solar panel driving mechanism (93) of the hot water supply system (S) according to Embodiment 1, the actuator unit (100) for driving the solar panel (92a) includes the two air bags (101, 102). Since each of the air bags (101, 102) is made of a relatively lightweight material such as rubber and formed in a hollow shape, it is easy to reduce the weight of the actuator unit (100), in comparison with a case where a metal cylinder or a metal piston is used as an actuator. As a result, loads imposed on the roof (R) where the solar panel driving mechanism (93) is installed can be reduced.

In addition, the two air bags (101, 102) are provided below the back surface of the solar panel (92a) such that the rotation shaft (95) is located between the air bags (101, 102). This configuration ensures that the solar panel (92a) rotates in both directions. Specifically, when the solar panel are inclined as illustrated in FIG. 7, less loads of the solar panel act on the air bag (101), compared to the second air bag (102). Accordingly, it might be impossible to rotate the solar panel (92a) only by discharging air from the first air bag (101). To address this problem, the above configuration includes two air bags (101, 102), and accordingly, ensures that the solar panel (92a) is rotated by extending the second air bag (102) with the compressed air supplied thereinto even when the solar panels are positioned as illustrated in FIG. 7.

Furthermore, Embodiment 1 includes the link member (98) linking the side faces of the solar panels (92a, 92b) to one another. This configuration enables adjustment of the angle of all of the solar panels (92a, 92b) using the single actuator unit (100). Thus, the solar panel unit (91) can be simplified.

### «Embodiment 2»

A hot water supply system (S) according to Embodiment 2 includes an actuator unit (100) that is structurally different from that of Embodiment 1. Specifically, the actuator unit (100) of Embodiment 2 includes one air bag (101) and a compression spring (99a) functioning as an urging member whereas the actuator unit (100) of Embodiment 1 includes two air bags (101, 102). Embodiment 2 will be described below while focusing on differences between Embodiments 1 and 2.

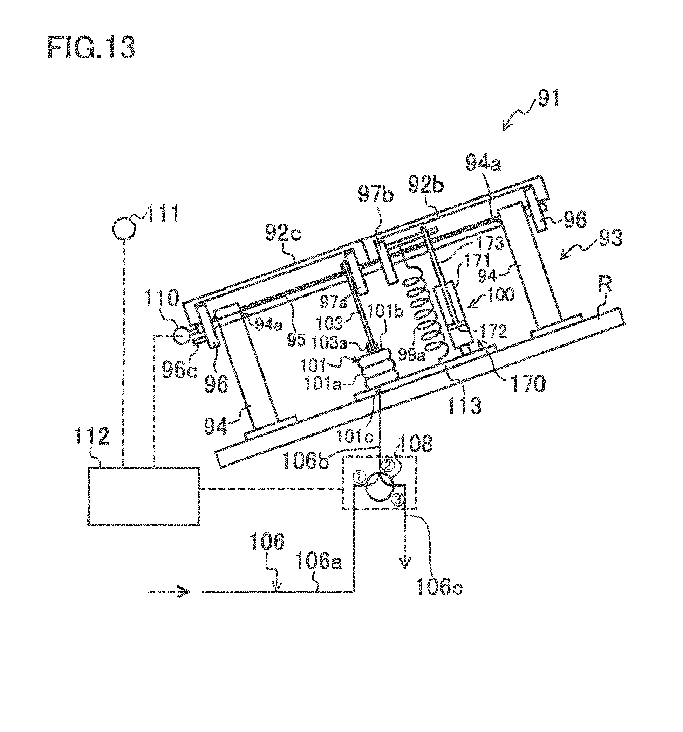

As shown in FIG. 13, the actuator unit (100) of Embodiment 2 includes the first air bag (101), a first rod member (103) coupled to the first air bag (101), and the compression spring (99a). These members (99a, 101, 103) are provided in association with one solar panel (92a) included in a plurality of solar panels (92a, 92b).

The compression spring (99a) constitutes an elastic member that urges the solar panel (92a). The compression spring (99a) is located opposite to the first air bag (101) relative to the rotation shaft (95). The compression spring (99a) has an end fixed to a base (113) and the other end fixed to a second inner mounting plate (97b). In this manner, the compression spring (99a) urges the solar panel (92a) in the direction from the end fixed to the base (113) to the other end fixed to the plate (97b).

A solar panel driving mechanism (93) of this embodiment includes a lock mechanism (170). The lock mechanism (170) includes a cylinder (171), a piston (172) capable of reciprocating in the cylinder (171), a piston rod (173) having an end fixed to the piston (172) and the other end protruding from the cylinder (171) and exposed to the outside, and a lock member (not shown) capable of locking the piston rod (173) in the cylinder (171). This lock member is switchable between a locked state in which the piston rod (173) is locked in the cylinder (171) and an unlocked state in which the piston rod (173) is unlocked to be able to reciprocate relative to the cylinder (171), in response to a command provided by a solar panel controller (112).

The solar panel controller (112) of Embodiment 2 is configured to control a first air supply/exhaust switching valve (108) and the lock mechanism (170). Specifically, the solar panel controller (112) switches the first air supply/exhaust switching valve (108) based on values sensed by an angle sensor (110) and an insolation sensor (111) while switching the lock member of the lock mechanism (170) between the locked state and the unlocked state.

Note that a solar panel unit (91) of Embodiment 2 has the same configuration as that of Embodiment 1, except for the omission of the second air bag side path (107) and the second air supply/exhaust switching valve (109).

### - Operation -

### <Operation by Solar Panel Unit >

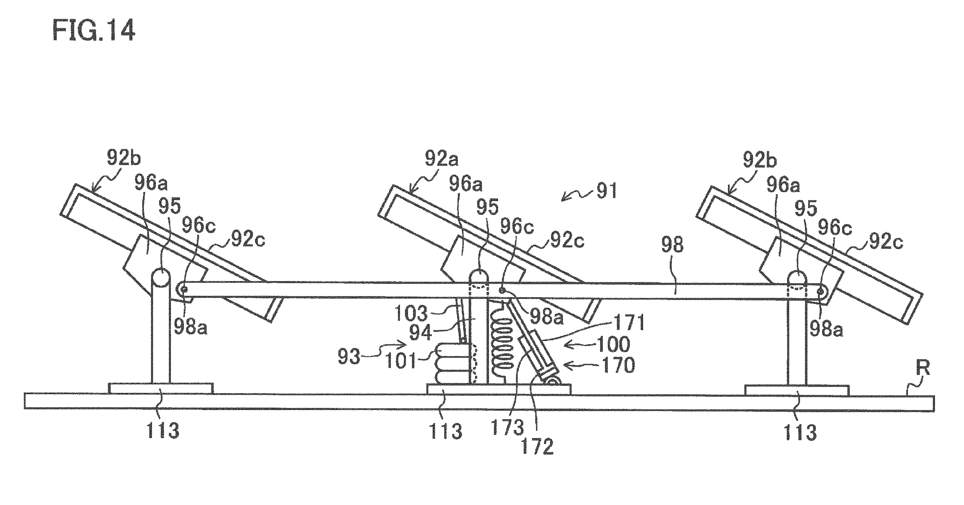

The solar panel unit (91) of Embodiment 2 adjusts the angle of the solar panels (92a, 92b) according to direction of sunlight, in a manner similar to Embodiment 1. Operation by the solar panel unit (91) is now described with reference to FIGS. 14, 15, and 16.

For example, let us suppose that the sun is east of the solar panels (i.e., on the upper right side in FIG. 14). In this case, the solar panel controller (112) first switches the lock member of the lock mechanism (170) to the unlocked state. The solar panel controller (112) then controls the first air supply/exhaust switching valve (108) such that the first air bag (101) extends against the urging force of the compression spring (99a). Specifically, the first air supply/exhaust switching valve (108) is caused to enter a first state, and accordingly, a first junction path (106a) comes into communication with a first air supply/exhaust path (106b). Consequently, compressed air from the first junction path (106a) flows into the first air bag (101) to cause the first air bag (101) to extend gradually, thereby causing the reception portion (101b) of the first air bag (101) to move upward against the urging force of the compression spring (99a). On the other hand, the piston rod (173) of the lock mechanism (170) slides into the cylinder (171) such that the length of the exposed portion of the piston rod (173) corresponds to the position illustrated in FIG. 14. In this manner, the solar panel (92a), whose back surface is pushed, rotates by a predetermined angle to be positioned at the angle illustrated in FIG. 14. Thereafter, the solar panel controller (112) switches the lock member of the lock mechanism (170) to the locked state, resulting in that the solar panels (92a, 92b) are locked in such a manner that they are not rotated by, e.g., a wind.

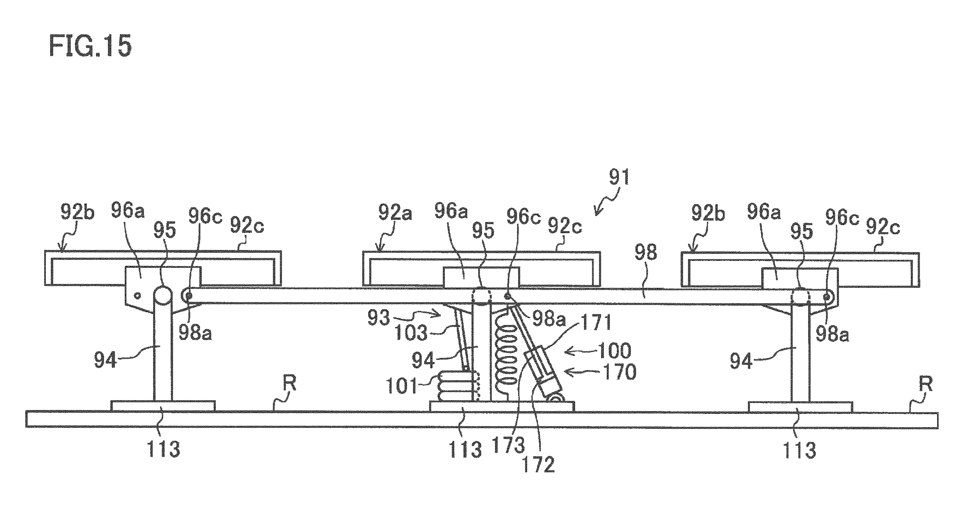

Let us now suppose that the sun is south of the solar panels (i.e., on the upper side in FIG. 15), for example. In this case, the solar panel controller (112) also switches the lock member of the lock mechanism (170) to the unlocked state. The solar panel controller (112) then controls the first air supply/exhaust switching valve (108) such that the solar panels (92a, 92b) are positioned horizontally. Specifically, the solar panel controller (112) moves the first reception portion (101b) of the first air bag (101) by appropriately switching the first air supply/exhaust switching valve (108) to the first state or a second states, and thereby positions the solar panels (92a, 92b) horizontally. Consequently, the compression spring (99a) imposes on the solar panel (92s) an urging force in the direction opposite to the direction in which the solar panel (92a) rotates when the first air bag (92a) extends (i.e., an urging force in the counterclockwise direction in FIG. 15), and accordingly, the solar panel (92a) rotates by a predetermined angle. On the other hand, the piston rod (173) of the lock mechanism (170) slides out from the cylinder (171) such that the length of the exposed portion of the piston rod (173) corresponds to the position illustrated in FIG. 15. In this manner, the solar panel (92a) becomes positioned at the angle illustrated in FIG. 15. Thereafter, the solar panel controller (112) switches the lock member of the lock mechanism (170) to the locked state, resulting in that the solar panels (92a, 92b) are locked in such a manner that they are not rotated by, e.g., a wind.

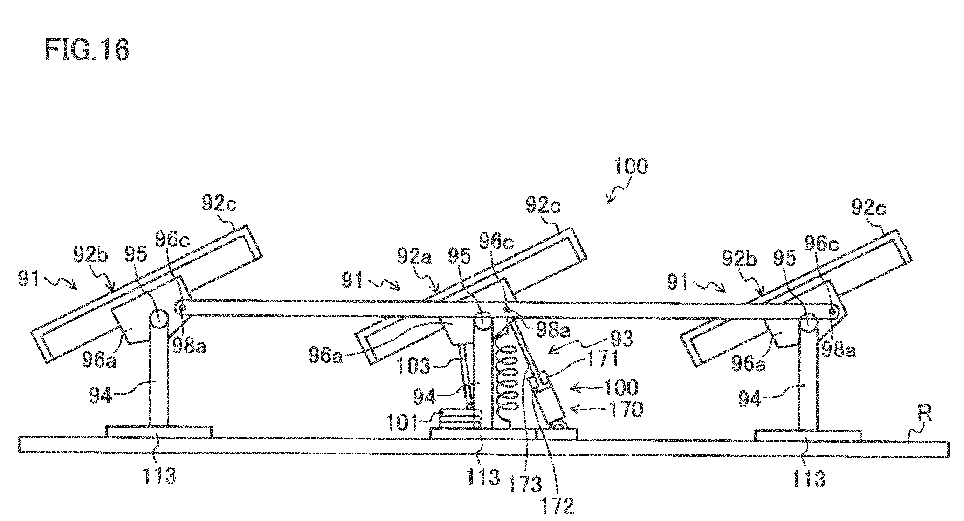

Let us suppose that the sun is west of the solar panels (i.e., on the upper left side in FIG. 16), for example. In this case, the solar panel controller (112) also switches the lock member of the lock mechanism (170) to the unlocked state. The solar panel controller (112) then controls the first air supply/exhaust switching valve (108) such that the urging force of the compression spring (99a) applies a pressure to the first air bag (101). Specifically, the first air supply/exhaust switching valve (108) is caused to enter the second state to discharge air from the first air bag (101), thereby reducing the internal pressure of the first air bag (101). Consequently, the urging force of the compression spring (99a) rotates the solar panel (92a) in the counterclockwise direction in FIG. 16. On the other hand, the piston rod (173) of the lock mechanism (170) slides out from the cylinder (171) such that the length of the exposed portion of the piston rod (173) corresponds to the position illustrated in FIG. 16. In this manner, the solar panel (92a) becomes positioned at the angle illustrated in FIG. 16. Thereafter, the solar panel controller (112) switches the lock member of the lock mechanism (170) to the locked state, resulting in that the solar panels (92a, 92b) are locked in such a manner that they are not rotated by, e.g., a wind.

### - Advantages of Embodiment 2 -

As described above, in the solar panel driving mechanism (93) of the hot water supply system (S) according to Embodiment 2, the actuator unit (100) for driving the solar panel (92a) includes the one air bag (101) and the one compression spring (99a). This configuration can also rotate the solar panels (92a, 92b) to position them at a predetermined angle, in a manner similar to Embodiment 1.

In addition, the solar panel driving mechanism (93) according to Embodiment 2 includes the lock mechanism (170) capable of controlling the rotation of the solar panel (92a). Accordingly, it is possible to ensure that the solar panels (92a, 93b) are locked at a predetermined angle by reducing the possibility that external forces acting on the solar panel (92a) will cause the solar panels (92a, 93b) to move out of desired positions.

### «Embodiment 3»

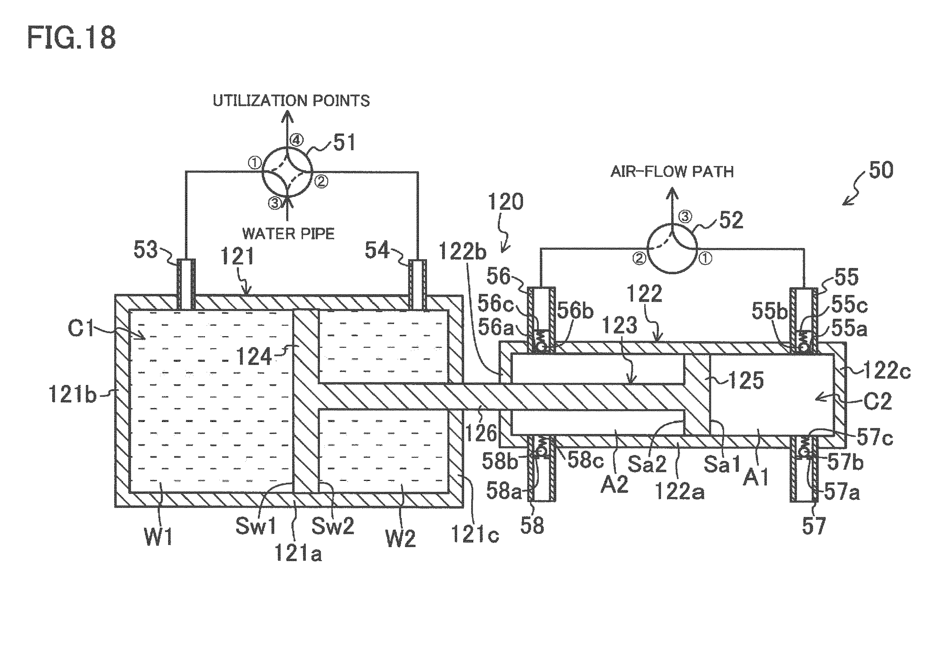

A hot water supply system (S) according to Embodiment 3 includes an air compression unit (50) that is structurally different from that of Embodiment 1. As illustrated in FIG. 18, the air compression unit (50) according to Embodiment 3 includes a water channel switcher (51), an air-flow path switcher (52), and a valve controller (no shown) that are similar to those of Embodiment 1. On the other hand, an air compressor (60) of Embodiment 3 differs from that of Embodiment 1: The air compressor (60) of Embodiment 3 is a two-cylinder type compressor including two cylinder members (121, 122).

The two cylinder members (121, 122) include a first cylinder member (121) and a second cylinder member (122). The first cylinder member (121) includes a cylindrical barrel (121a), a first closer (121b) closing an axial end of the cylindrical barrel (121a), and a second closer (121c) closing the other axial end of the cylindrical barrel (121a). The second cylinder member (122) includes a cylindrical barrel (122a), a first closer (122b) closing an axial end of the cylindrical barrel (122a), and a second closer (122c) closing the other axial end of the cylindrical barrel (122a). The first cylinder member (121) includes a first cylinder chamber (C1) formed therein, and the second cylinder member (122) includes a second cylinder chamber (C2) formed therein. The first cylinder chamber (C1) is greater than the second cylinder chamber (C2) in diameter. The first cylinder chamber (C1) has an axial length smaller than that of the second cylinder chamber (C2).

In a manner similar to Embodiment 1, the air compression unit (50) of Embodiment 3 includes a piston member (123). The piston member (123) includes a first piston portion (124) accommodated in the first cylinder chamber (C1), a second piston portion (125) accommodated in the second cylinder chamber (C2), and a piston rod (126) through which the piston portions (124, 125) are coupled to each other, resulting in that the piston member (123) constitutes a movable member. Each of the first and second piston portions (124, 125) has a disc shape, and the first piston portion (124) is greater than the second piston portion (125) in diameter. The piston rod (126) penetrates the second closer (121c) of the first cylinder member (121) and the first closer (122b) of the second cylinder member (122) to couple the piston portions (124, 125) to each other. The piston rod (126) has a diameter smaller than the diameters of the piston portions (124, 125) and extends coaxially with the axes of both cylinder members (121, 122) in the axial direction.

The first piston portion (124) divides the first cylinder chamber (C1) into a first water chamber (W1) and a second water chamber (W2). The first water chamber (W1) is located between the first closer (121b) and the first piston portion (124). The second water chamber (W2) is located between the first piston portion (124) and the second closer (121c). In other words, in the first cylinder chamber (C1), the first piston portion (124) is interposed between the first water chamber (W1) and the second water chamber (W2), and the first water chamber (W1) is adjacent to the first closer (121b) relative to the first piston portion (124) in the axial direction whereas the second water chamber (W2) is adjacent to the second closer (121c) relative to the first piston portion (124) in the axial direction.

The second piston portion (125) divides the second cylinder chamber (C2) into a first air chamber (A1) and a second air chamber (A2). The first air chamber (A1) is located between the second closer (122c) and the second piston portion (125). The second air chamber (A2) is located between the second piston portion (125) and the first closer (122b). In other words, in the second cylinder chamber (C2), the second piston portion (125) is interposed between the first air chamber (A1) and the second air chamber (A2), and the first air chamber (A1) is adjacent to the second closer (122c) relative to the second piston portion (125) in the axial direction whereas the second air chamber (A2) is adjacent to the first closer (122b) relative to the second piston portion (125) in the axial direction.

In a manner similar to Embodiment 1, the air compressor (120) of Embodiment 3 has six ports (53-58) connected thereto. Specifically, regarding the first cylinder member (121), the first water port (53) is connected to the first water chamber (W1), and the second water port (54) is connected to the second water chamber (W2). Regarding the second cylinder member (122), an inflow end of the first discharge port (55) and an outflow end of the first suction port (57) are connected to the first air chamber (A1), and an inflow end of the second discharge port (56) and an outflow end of the second suction port (58) are connected to the second air chamber (A2).

Also in the air compressor (120) of Embodiment 3, areas of pressure-receiving faces (Sw1, Sw2) that face the respective water chambers (W1, W2) are larger than areas of pressurizing faces (Sa1, Sa2) that face respective air chambers (A1, A2). Specifically, in the piston member (123), the area of the pressure-receiving face Sw1 provided on the first piston portion (124) and adjacent to the first water chamber (W1) is larger than that of the pressurizing face Sa1 provided on the second piston portion (125) and adjacent to the first air chamber (A1). In the piston member (123), the area of the pressure-receiving face Sw2 provided on the first piston portion (124) and adjacent to the second water chamber (W2) is larger than that of the pressurizing face Sa2 provided on the second piston portion (125) and adjacent to the second air chamber (A2).

### <Compressing Operation>

Compressing operation by the air compression unit (50) of Embodiment 3 is now described with reference to FIGS. 18-21. In a manner similar to Embodiment 1, the air compression unit (50) of Embodiment 3 alternately repeats, at predetermined intervals, a first operation in which air in the first air chamber (A1) is compressed and a second operation in which air in the second air chamber (A2) is compressed.

When an initial first operation starts, the water channel switcher (51) and the air-flow path switcher (52) enter the respective first states (indicated by the solid lines in FIG. 18). Consequently, city water from the city water pipe flows into first water chamber (W1) through the first water port (53). On the other hand, since the second water chamber (W2) that is in communication with the second water port (54) is free of water, no water flows through the second water port (54).

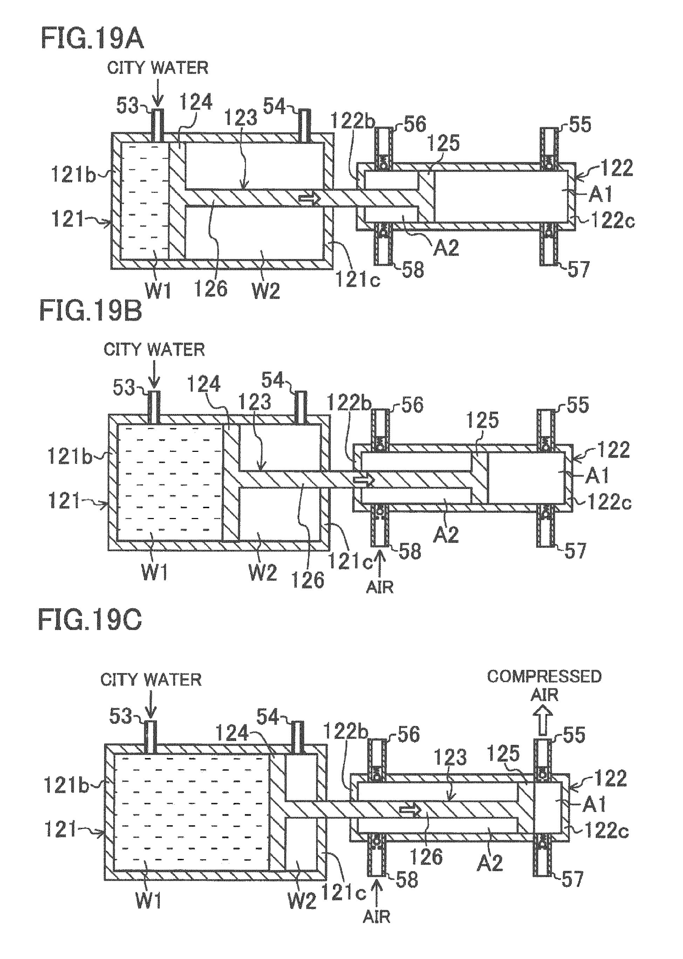

In the state illustrated in FIG. 19(A), when further water flows from the first water port (53) into the first water chamber (W1), a water pressure acts on the pressure-receiving face Sw1 of the first piston portion (124) to cause the piston member (123) to move toward the second closers (121c, 122c) (see FIG. 19(B)). Consequently, the volume of the first air chamber (A1) gradually decreases and air in the first air chamber (A1) is compressed. At this time, since the pressure-receiving face Sw1 of the first piston portion (124) is larger than the pressurizing face Sa1 for air of the first air chamber (A1), the pressure of the air in the first air chamber (A1) can be increased to exceed the pressure of the city water in the first water chamber (W1), according to Pascal's principle.

In addition, in the second cylinder member (122), as the second piston portion (125) moves, the volume of the second air chamber (A2) gradually increases. Consequently, air present outside the second cylinder member (122) is sucked into the second air chamber (A2) through the second suction port (58).

When the pressure of the air in the first air chamber (A1) becomes equal to or higher than a predetermined pressure, a ball valve (55b) in the first discharge port (55) is opened. Consequently, the compressed air in the first air chamber (A1) is discharged to an air-flow path (40) through the first discharge port (55) (see FIG. 19(C)). The compressed air having been discharged to the air-flow path (40) is stored in an accumulator tank (41).

After a lapse of a predetermined time from the initial first operation, the second operation is performed. In the second operation, the water channel switcher (51) and the air-flow path switcher (52) enter the respective second states (indicated by the dashed lines in FIG. 18). Consequently, city water from the city water pipe flows into the second water chamber (W2) through the second water port (54).

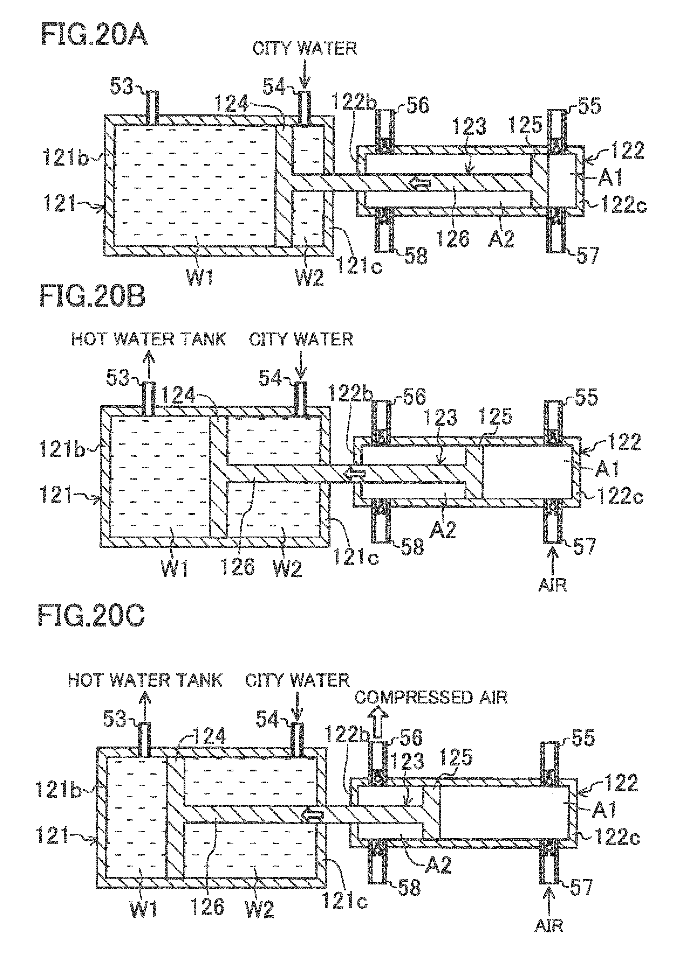

In the state illustrated in FIG. 20(A), when further water flows from the second water port (54) into the second water chamber (W2), a water pressure acts on the pressure-receiving face Sw2 of the first piston portion (124) to cause the piston member (123) to move toward the first closers (121b, 122b) (see FIG. 20(B)). Consequently, the volume of the second air chamber (A2) gradually decreases and the air in the second air chamber (A2) is compressed. At this time, since the pressure-receiving face Sw2 of the first piston portion (124) is larger than the pressurizing face Sa2 for air of the second air chamber (A2), the pressure of the air in the second air chamber (A2) can be increased to exceed the pressure of the city water in the second water chamber (W2), according to Pascal's principle.

In addition, in the second cylinder member (122), as the second piston portion (125) moves, the volume of the first air chamber (A1) gradually increases. Consequently, air present outside the second cylinder member (122) is sucked into the first air chamber (A1). Further, in the first cylinder member (121), as the first piston portion (124) moves, the volume of the first water chamber (W1) gradually decreases. Consequently, the water of the first water chamber (W1) flows out through the first water port (53) and passes through a feed-water channel (21) to be supplied to a hot water tank (30) (see FIG. 20 (B)).

When the pressure of the air in the second air chamber (A2) becomes equal to or higher than a predetermined pressure, a ball valve (56b) in the second discharge port (56) is opened. Consequently, the compressed air in the second air chamber (A2) is discharged to the air-flow path (40) through the second discharge port (56) (see FIG. 20(C)). The compressed air having been discharged to the air-flow path (40) is stored in the accumulator tank (41).

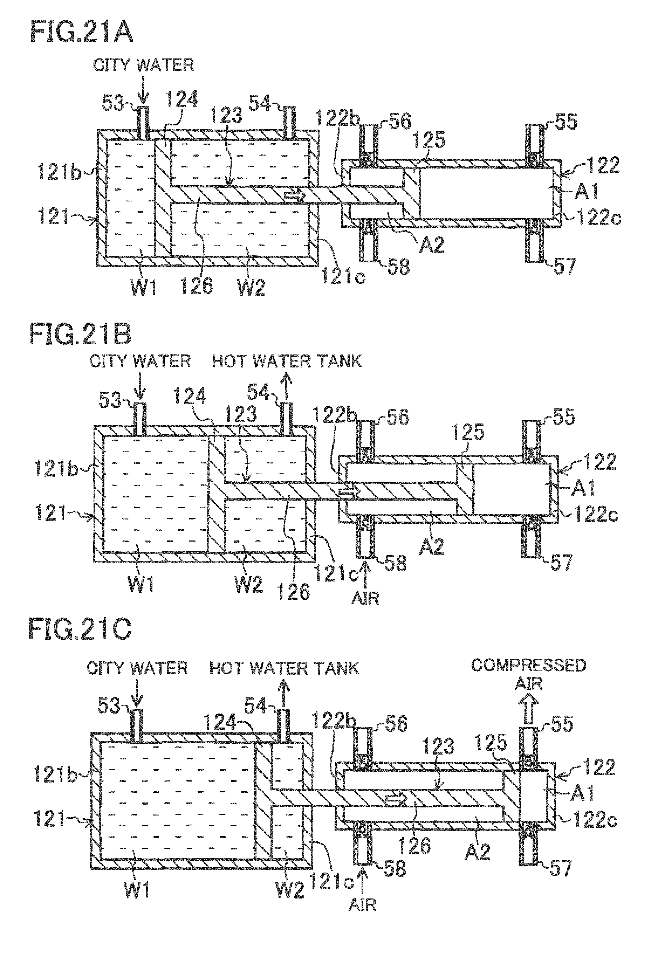

After a lapse of a predetermined time from the second operation, the first operation is performed again. Consequently, water flows from the first water port (53) into the first water chamber (W1), and the piston member (123) moves toward the second closers (121c, 122c) (see FIGS. 21(A) and 21(B)). The air in the first air chamber (A1) is accordingly compressed and the water in the second water chamber (W2) is supplied to the hot water tank (30) through the second water port (54). At the same time, air present outside the second cylinder member (122) is sucked into the second air chamber (A2).

When the pressure of the air in the first air chamber (A1) becomes equal to or higher than a predetermined pressure, the ball valve (55b) in the first discharge port (55) is opened. Consequently, the compressed air in the first air chamber (A1) is discharged to the air-flow path (40) through the first discharge port (55) (see FIG. 21 (C)). The compressed air having been discharged to the air-flow path (40) is stored in the accumulator tank (41).

After the above described operation, the second operation illustrated in FIG. 20 and the first operation illustrated in FIG. 21 are alternately repeated. In this manner, the air compression unit (50) continuously supplies compressed air and city water to the accumulator tank (41) and the hot water tank (30), respectively.

### - Advantages of Embodiment 3 -

In a manner similar to Embodiment 1, the air compression unit (50) of Embodiment 3 can supply city water to the utilization point (2) while continuously producing compressed air, by alternately performing the first and second operations. The area of the pressure-receiving face Sw1 adjacent to the first water chamber (W1) is larger than that of the pressurizing face Sa1 adjacent to the first air chamber (A1), and the area of the pressure-receiving face Sw2 adjacent to the second water chamber (W2) is larger than that of the pressurizing face Sa2 adjacent to the second air chamber (A2). Accordingly, the pressures of the air in the air chambers (A1, A2) can be increased to exceed the pressure of the city water.

In particular, since the air compression unit (50) of Embodiment 3 includes two separate cylinder members (121, 122), it is easy to design the pressure-receiving faces Sw1 and Sw2 to have areas larger than those of the pressurizing faces Sa1, Sa2, respectively.

### «Embodiment 4»

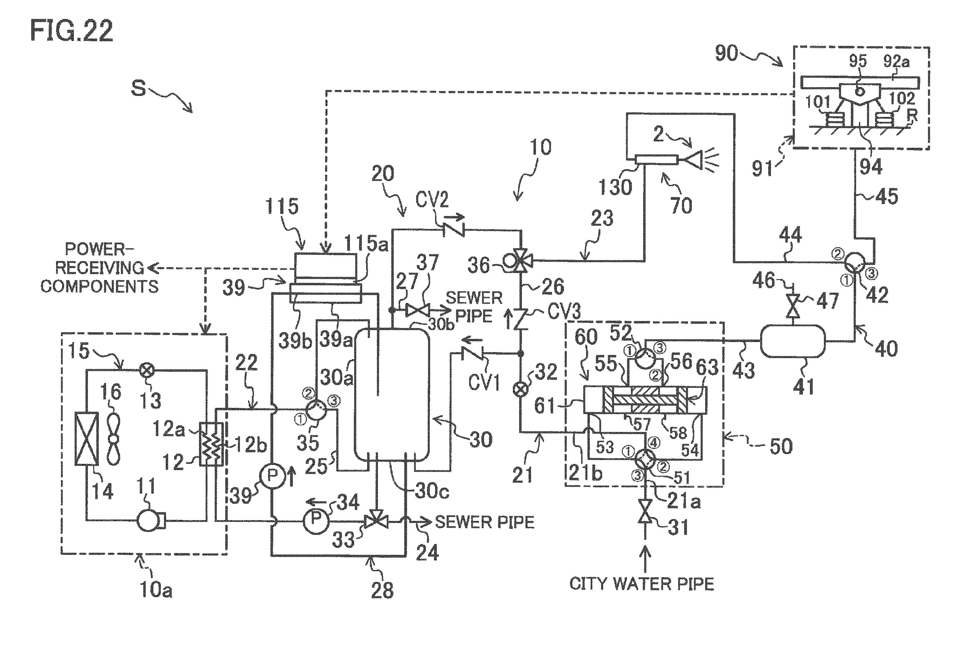

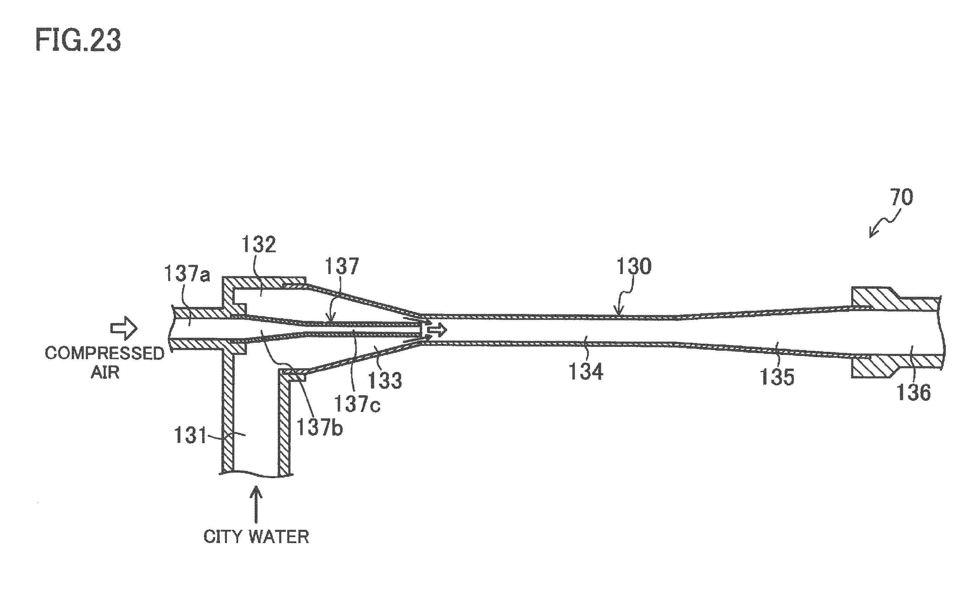

A hot water supply system (S) according to Embodiment 4 includes a pressurization unit (70) that is structurally different from that of Embodiment 1. The pressurization unit (70) of the Embodiment 4 is connected to a portion upstream of and close to a shower (2). As illustrated in FIGS. 22 and 23, the pressurization unit (70) of the Embodiment 4 constitutes a pressurization mechanism of the so-called ejector type, and includes an ejector mechanism (130).

The ejector mechanism (130) includes, in the upstream-to-downstream direction of flow of water, a water conduit (131), a columnar channel (132), a diameter-reducing water channel (133), a mixing channel (134), a diameter-expanding water channel (135), and a water emission channel (136). Water flowing from a hot water tank (30) enters the water conduit (131). The columnar channel (132) has a columnar shape. The water conduit (131) is connected to a portion of the circumference of the columnar channel (132), and the diameter-reducing water channel (133) is connected to an axial end of the columnar channel (132). The diameter-reducing water channel (133) is a substantially conical channel in which a cross-sectional area of flow path gradually decreases toward a downstream end.

The mixing channel (134) is connected between the diameter-reducing water channel (133) and the diameter-expanding water channel (135). The mixing channel (134) has a shape in which a cross-sectional area of flow path is substantially uniform from its inflow end to its outflow end. The mixing channel (134) is greater than the diameter-reducing water channel (133) and the diameter-expanding water channel (135) in flow path length.

The diameter-expanding water channel (135) is configured to reduce the flow velocity of water having flowed out from the mixing channel (134) and increase the pressure of the water. The diameter-expanding water channel (135) is a substantially conical channel in which a cross-sectional area of flow path gradually increases toward a downstream end. The water emission channel (136) is connected to the downstream end of the diameter-expanding water channel (135). A downstream end of the water emission channel (136) is connected to the shower (2) (not shown).

The ejector mechanism (130) includes an air nozzle (137). The air nozzle (137) includes an air conduit (137a), a diameter-reducing air path (137b) and an air emission path (137c), in the upstream-to-downstream direction of flow of air.

The air conduit (137a) is connected to a first air supply path (44) to which compressed air is supplied. The diameter-reducing air path (137b) is connected to a downstream end of the air conduit (137a), and is located within the columnar channel (132). The diameter-reducing air path (137b) is configured to increase the flow velocity of air by narrowing the flow path of the air. The diameter-reducing air path (137b) is a substantially conical channel in which cross-sectional area of flow path of air gradually decreases toward a downstream end. The air emission path (137c) is connected to the downstream end of the diameter-reducing air path (137b), and is located within the diameter-reducing water channel (133). An outflow end of the air emission path (137c) opens in an upstream portion of the mixing channel (134). This structure causes water flowing out from the diameter-reducing water channel (133) and air supplied through the air nozzle (137) to be mixed together in the mixing channel (134).

### <Pressurizing Operation>

Pressurizing operation by the pressurization unit (70) of Embodiment 4 is now described. When the pressurization unit (70) is in operation, a three-way switching mechanism (42) enters a state indicated by the solid line in FIG. 22 to cause its first port to communicate with its second port. Consequently, compressed air contained in an accumulator tank (41) is supplied to the pressurization unit (70). As illustrated in FIG. 23, the compressed air flows into the air nozzle (137) of the ejector mechanism (130). Air having flowed in to the air nozzle (137) passes through the air conduit (137a) to reach the diameter-reducing air path (137b), where the flow velocity is increased, and then flows to the mixing channel (134) through the air emission path (137c).

On the other hand, water supplied from the hot water tank (30) flows into the water conduit (131) of the ejector mechanism (130). The water flows into the columnar channel (132), where the water is guided in a perpendicular direction, and then flows through the diameter-reducing channel (133). Since the compressed air ejected from the air nozzle (137) cause a negative pressure to act on the diameter-reducing channel (133), the water in the diameter-reducing channel (133) is drawn by the compressed air to be caused to flow into the mixing channel (134), where the flow velocity of the water is increased. At the same time, the air and the water are mixed together in the mixing channel (134). When the water having been mixed in the mixing channel (134) flows through the diameter-expanding water channel (135), the cross-sectional area of flow path of water increases and the flow velocity decreases. Consequently, the pressure of the water increases in the diameter-expanding water channel (135). In this manner, the pressurized water is sent to the shower (2) together with air. As a result, the water having a relatively high discharge pressure is supplied through the shower (2) to, e.g., a user.

### - Advantages of Embodiment 4 -

In a manner similar to Embodiment 1, Embodiment 4 is configured to supply, through the shower (2), water having been pressurized by the pressurization unit (70). It is therefore possible to cause the shower (2) to spout water having a sufficient discharge pressure although a pressure-reducing valve (32) reduces the pressure of city water in order to ensure that the hot water tank (30) resists pressures.

In addition, Embodiment 4 employs the ejector-type pressurization mechanism that includes the ejector mechanism (130). Accordingly, it is possible to increase the water pressure with high degrees of efficiency by using a suction pressure generated by the compressed air. Since water and air are mixed together in the mixing channel (134), water containing fine air bubbles can be spouted from the shower (2). In this manner, a desired wash effect can be obtained while reducing the amount of water spouted from the shower (2), thereby reducing the consumption of water.

### «Embodiment 5»

In a hot water supply system (S) according to Embodiment 5, diaphragm-type pumps having the same structure as that of the pressurization unit (70) (see FIG. 3) of Embodiment 1 are used as a first circulating pump (34) and a second circulating pump (38). Thus, the first circulating pump (34) and the second circulating pump (38) of Embodiment 5 are driven by compressed air.

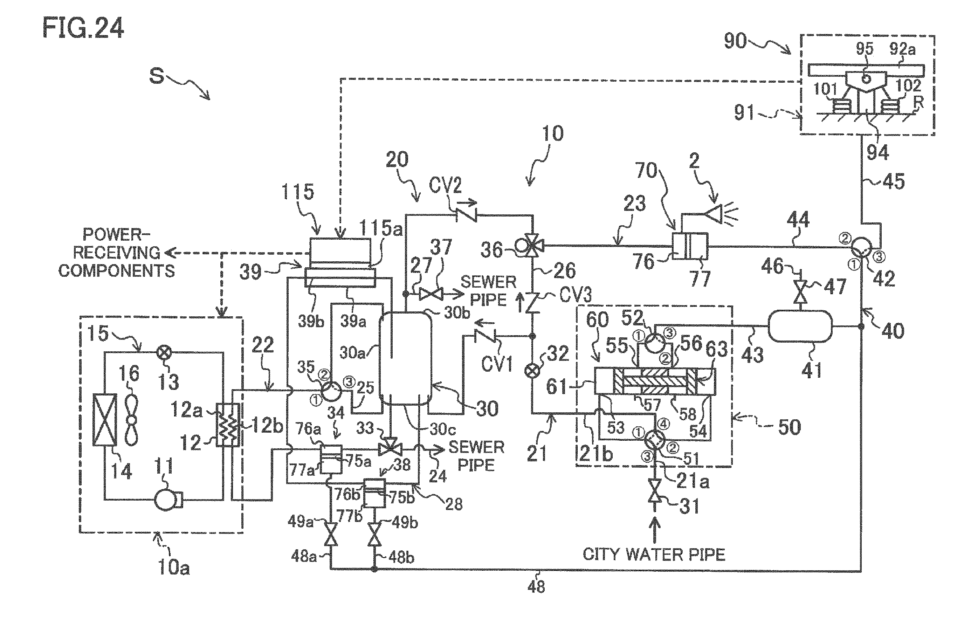

Specifically, as illustrated in FIG. 24, an air-flow path (40) of Embodiment 5 includes a third air supply path (48) branching off from a main air supply path (43): The third air supply path (48) has a downstream portion branching into a first pump side air supply path (48a) and a second pump side air supply path (48b). The first pump side air supply path (48a) has a downstream end connected to an air-introducing chamber (77a) of the first circulating pump (34). The second pump side air supply path (48b) has a downstream end connected to an air-introducing chamber (77b) of the second circulating pump (38). A first on-off valve (49a) is connected to the first pump side air supply path (48a), and a second on-off valve (49b) is connected to the second pump side air supply path (48b). These on-off valves (49a, 49b) are each constituted by, e.g., a solenoid on-off valve.

When the first circulating pump (34) is in operation, the first on-off valve (49a) is opened, and accordingly, compressed air of an accumulator tank (41) is supplied to the air-introducing chamber (77a) of the first circulating pump (34) to cause a diaphragm (75a) to change its shape and enter the state illustrated in FIG. 3(A) and the state illustrated in FIG. 3(B) in an alternating manner. Consequently, a water-pressurizing chamber (76a) of the first circulating pump (34) alternately increases and decrease in volume, thereby water of a heating circulation channel (22) is transferred.

In a similar manner, when the second circulating pump (38) is in operation, the second on-off valve (49b) is opened, and accordingly, compressed air of the accumulator tank (41) is supplied to the air-introducing chamber (77b) of the second circulating pump (38) to cause a diaphragm (75b) to change its shape and enter the state illustrated in FIG. 3(A) and the state illustrated in FIG. 3(B) in an alternating manner. Consequently, a water-pressurizing chamber (76b) of the second circulating pump (38) alternately increases and decrease in volume, thereby water of the cooling circulation channel (28) is transferred.

### «Embodiment 6»

A hot water supply system (S) according to Embodiment 6 includes, instead of the shower (2) of Embodiment 1, a faucet (3) as a utilization point. The faucet (3) is connected to an outflow end of a water channel (20), and constitutes a discharge mechanism configured to discharge water at a predetermined pressure. In Embodiment 6, the faucet (3) is located on the third floor of a house whereas a hot water tank (30) is located at a level near the ground. Thus, in Embodiment 6, the utilization point to which water is supplied is located higher than the hot water tank (30).

Mounting the faucet (3) at the high position in the above manner provides a large head between the hot water tank (30) and the faucet (3), thereby easily reducing the pressure of water discharged from the faucet (3). In Embodiment 6, however, a pressurization unit (70) similar to that of Embodiment 1 is provided in a portion upstream of and close to the faucet (3). Accordingly, it is possible to ensure that water supplied through the faucet (3) has a sufficient discharge pressure.

### «Embodiment 7»

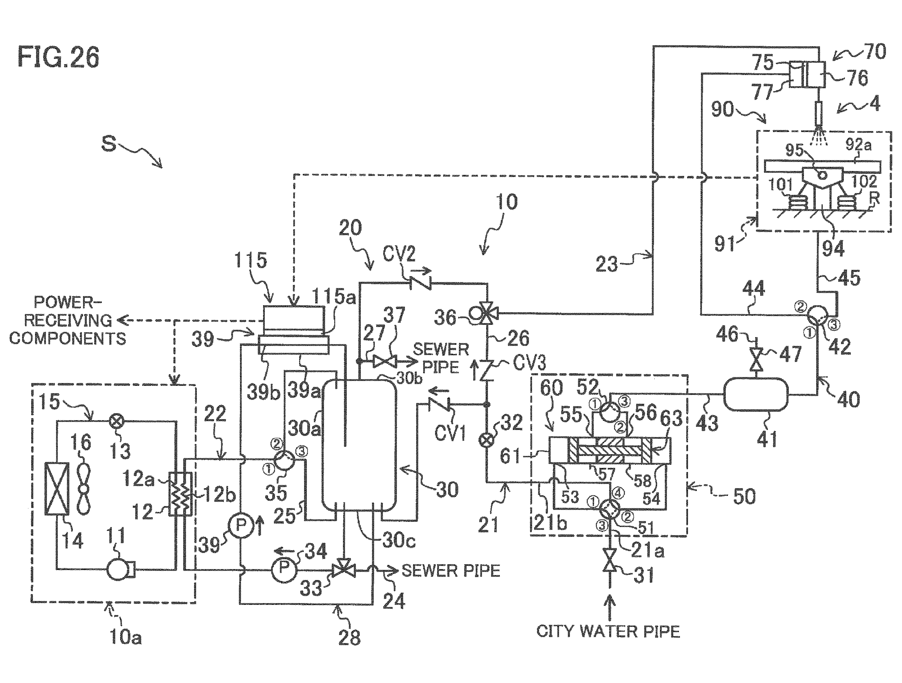

A hot water supply system (S) according to Embodiment 7 illustrated in FIG. 26 includes, instead of the shower (2) of Embodiment 1, an atomizer (4) as a utilization point. The atomizer (4) is connected to an outflow end of a water channel (20), and constitutes a discharge mechanism configured to discharge water at a predetermined pressure. In Embodiment 7, the atomizer (4) is located above the roof whereas a hot water tank (30) is located at a level near the ground. Thus, also in Embodiment 7, the utilization point to which water is supplied is located higher than the hot water tank (30).

In Embodiment 7, the atomizer (4) has an outlet facing light-receiving faces of solar panels (92a, 92b). The atomizer (4) sprays cleaning water through the outlet toward the light-receiving faces of the solar panels (92a, 92b). Accordingly, the solar panels (92a, 92b) can be cleaned as appropriate by utilizing compressed air.

On the other hand, when the atomizer (4) is provided at a high position as described above, the pressure of water to be sprayed by the atomizer (4) is easily reduced. In Embodiment 7, however, a pressurization unit (70) similar to that of Embodiment 1 is provided in a portion upstream of and close to the atomizer (4). In this manner, it is possible to ensure that water supplied through the atomizer (4) has a sufficient discharge pressure such that sufficient wash effects are exerted on the solar panels (92a, 92b).

### «Embodiment 8»

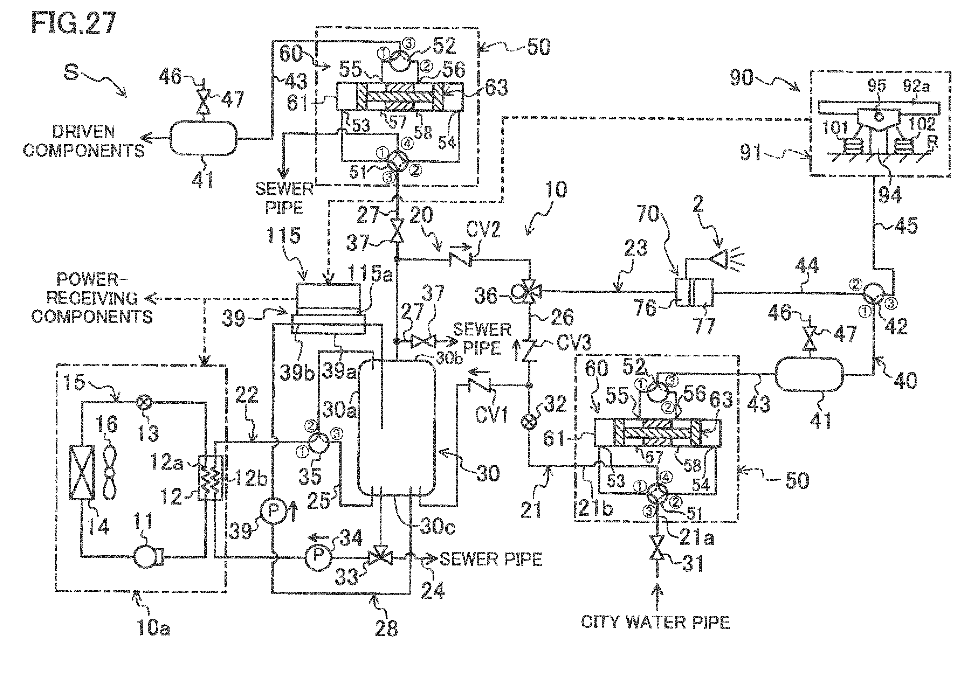

In a hot water supply system (S) according to Embodiment 8 illustrated in FIG. 27, an air compression unit (50) similar to that of Embodiment 1 is provided in a circuit located between a hot water tank (30) and a utilization point (2). Specifically, the air compression unit (50) and an accumulator tank (41) are provided in an outflow side of the relief channel (27) branching off from the supply channel (23).

As described above, water vapor emitted by hot water in a hot water tank (30) may excessively increase the internal pressure of the hot water tank (30). In such a case, the relief valve (37) is opened and water of the hot water tank (30) flows out to enter the relief channel (27). The embodiment illustrated in FIG. 27 utilizes the pressure of the water having flowed into the relief channel (27) to compress air. In this manner, the hot water supply system (S) can recover, as an air pressure, the pressure of the water that is to be discharged to a sewer pipe, and use the air pressure to drive a predetermined driven component.

### «Embodiment 9»

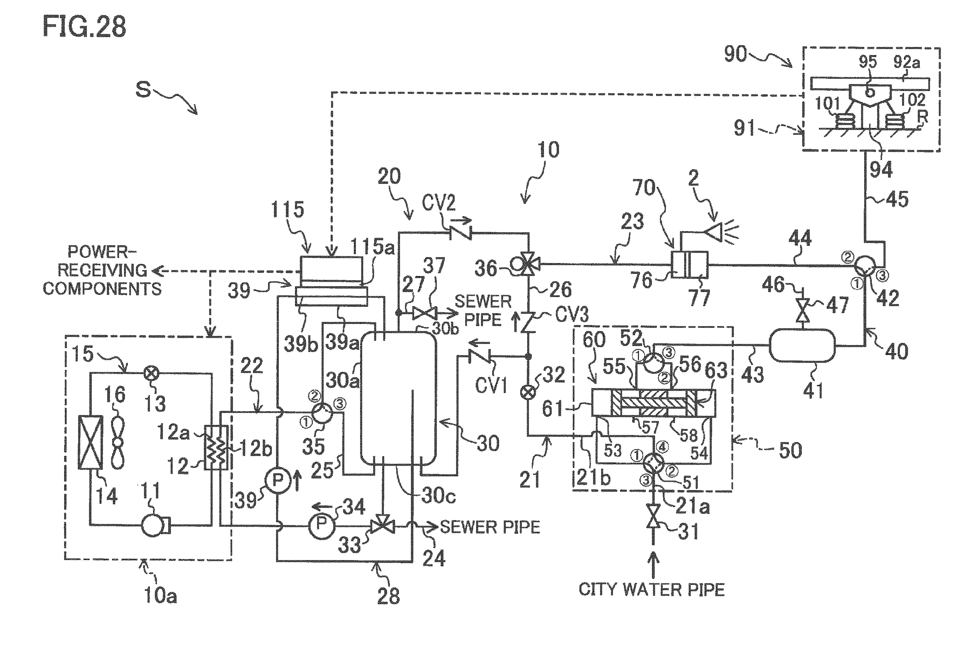

In a hot water supply system (S) according to Embodiment 9 illustrated in FIG. 28, inflow and outflow ends of a cooling circulation channel (28) are located at heights different from the heights of the inflow and outflow ends of the cooling circulation channel (28) of Embodiment 1. Specifically, in the embodiment illustrated in FIG. 28, the cooling circulation channel (28) has the inflow end located at an intermediate point in the vertical direction of a hot water tank (30) and the outflow end located near a top portion of the hot water tank (30). In this embodiment, circulating water having absorbed heat from the heat-producing components of a power conditioner (115) is retuned to a relatively upper portion of the hot water tank (30). Accordingly, it is possible to prevent water temperature in a lower portion of the hot water tank (30) from increasing excessively, and to keep relatively low the temperature of water flowing from the hot water tank (30) to a heating circulation channel (22). Consequently, in a refrigerant circuit (15), a refrigerant (i.e., carbon dioxide) in a water heat exchanger (12) is caused to dissipate heat sufficiently, thereby a desired refrigerating cycle can be performed.

### «Embodiment 10»

A hot water supply system (S) according to Embodiment 10 includes a diaphragm-type pressurization mechanism that is different from the diaphragm-type pressurization unit (70) of Embodiment 1.

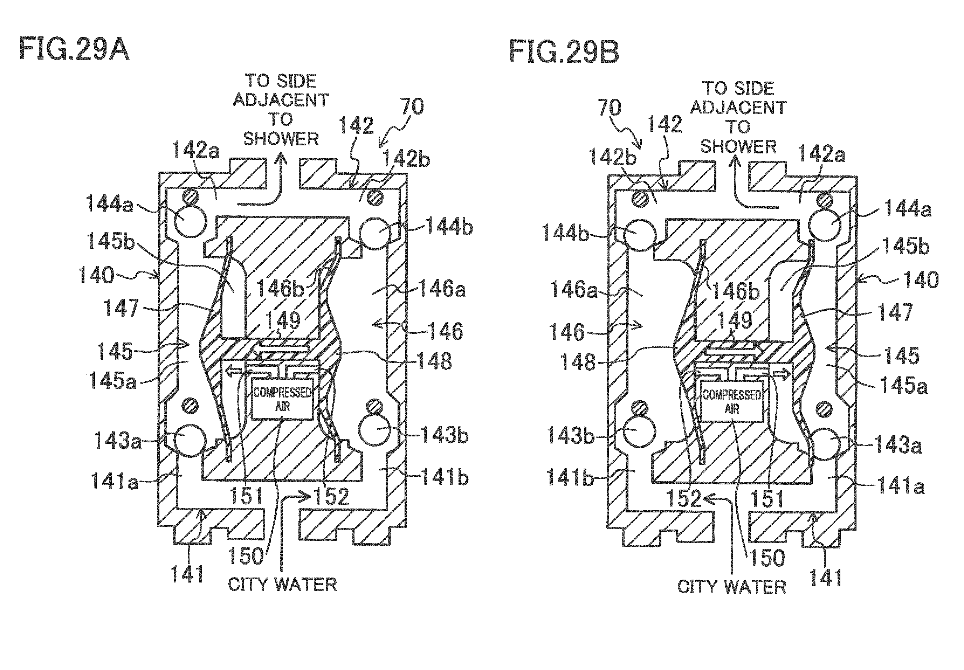

Specifically, the pressurization unit (70) of the embodiment illustrated in FIG. 29 includes a housing (140) in which a water channel is located. This water channel includes an upstream branch channel (141) communicating with a side adjacent to a hot water tank (30) and a downstream branch channel (142) communicating with a side adjacent to a shower (2). An outflow side of the upstream branch channel (141) branches into a first branch channel (141a) and a second branch channel (141b). In a similar manner, an inflow side of the downstream branch channel (142) branches into a third branch channel (142a) and a fourth branch channel (142b). A first ball valve (143a) is provided at an outflow end of the first branch channel (141a), and a second ball valve (143b) is provided at an outflow end of the second branch channel (141b). A third ball valve (144a) is provided at an inflow end of the third branch channel (142a), and a fourth ball valve (144b) is provided at an inflow end of the fourth branch channel (142b).

The housing (140) includes therein a first chamber (145) and a second chamber (146). The first chamber (145) is located between the first branch channel (141a) and the third branch channel (142a). The second chamber (146) is located between the second branch channel (141b) and the fourth branch channel (142b). A first diaphragm (147) divides the first chamber (145) into a first water-pressurizing chamber (145a) and a first air-introducing chamber (145b). A second diaphragm (148) divides the second chamber (146) into a second water-pressurizing chamber (146a) and a second air-introducing chamber (146b). The first diaphragm (147) and the second diaphragm (148) are connected to each other through a connecting shaft (149).

The housing (140) includes therein an air supply chamber (150) to which compressed air is supplied from a side adjacent to an air compression unit (50). The air supply chamber (150) communicates with the first air-introducing chamber (145b) through a first switching channel (151) and with the second air-introducing chamber (146b) through a second switching channel (152). In the pressurization unit (70), a first operation (illustrated in FIG. 29(A)) and a second operation (illustrated in FIG. 29(B)) are repeated in an alternating manner. In the first operation, a switching mechanism (not show) causes compressed air of the air supply chamber (150) to be supplied to the first air-introducing chamber (145b) through the first switching channel (151). In the second operation, the switching mechanism causes compressed air of the air supply chamber (150) to be supplied to the second air-introducing chamber (146b) through the second switching channel (152).

Specifically, in the first operation, when compressed air of the air supply chamber (150) is supplied to the first air-introducing chamber (145b), the compressed air pushes and moves the first diaphragm (147) toward the first water-pressurizing chamber (145a). At the same time, the second diaphragm (148) is moved toward the second air-introducing chamber (146b). Consequently, the volume of the second water-pressurizing chamber (146a) increases. The internal pressure of the second water-pressurizing chamber (146a) decreases in this manner, thereby causing the second ball valve (143b) to move toward the second water-pressurizing chamber (146a) to open the second branch channel (141b). Thus, water present in the side adjacent to the hot water tank (30) flows into the second water-pressurizing chamber (146a) through the second branch channel (141b).

The second operation is subsequently performed in the following manner. When compressed air of the air supply chamber (150) is supplied to the second air-introducing chamber (146b), the compressed air pushes and moves the second diaphragm (148) toward the second water-pressurizing chamber (146a). Accordingly, the volume of the second water-pressurizing chamber (146a) decreases, and water present in the second water-pressurizing chamber (146a) is pressurized. The pressure in the second water-pressurizing chamber (146a) then increases, thereby causing the fourth ball valve (144b) to move toward the downstream branch channel (142) to open the fourth branch channel (142b). Consequently, pressurized water is supplied to the shower (2) through the downstream branch channel (142).

In the second operation, when the first diaphragm (147) moves toward the first air-introducing chamber (145b), the volume of the first water-pressurizing chamber (145a) increases. In this manner, the internal pressure of the first water-pressurizing chamber (145a) decreases, thereby causing the first ball valve (143a) to move toward the first water-pressurizing chamber (145a) to open the first branch channel (141a). Consequently, water present in the side adjacent to the hot water tank (30) flows into the first water-pressurizing chamber (145a) through the first branch channel (141a).

Subsequently, the first operation is performed again. Specifically, compressed air of the air supply chamber (150) is supplied to the first air-introducing chamber (145b), and the compressed air pushes and moves the first diaphragm (147) toward the first water-pressurizing chamber (145a), resulting in that the volume of the first water-pressurizing chamber (145a) decreases and water present in the first water-pressurizing chamber (145a) is pressurized. When the pressure in the first water-pressurizing chamber (145a) increases, the third ball valve (144a) is caused to move toward the downstream branch channel (142) to open the third branch channel (142a). Consequently, pressurized water is supplied to the shower (2) through the downstream branch channel (142).

In the first operation, when the second diaphragm (148) moves toward the second air-introducing chamber (146b), the volume of the second water-pressurizing chamber (146a) increases. In this manner, the internal pressure of the second water-pressurizing chamber (146a) decreases, thereby causing the second ball valve (143b) to move toward the second water-pressurizing chamber (146a) to open the second branch channel (141b). Consequently, water present in the side adjacent to the hot water tank (30) flows into the second water-pressurizing chamber (146a) through the second branch channel (141b).

As described above, the first and second operation are alternately performed in the pressurization unit (70) of the embodiment illustrated in FIG. 29. As a result, the water pressurized in the pressurization unit (70) is continuously supplied to the shower (2), and water having a relatively high discharge pressure is supplied through the shower (2) to, e.g., a user.

### «Other Embodiments»

The above embodiments may have the configurations as follows.

Although each of the above embodiments includes the link member (98) linking the solar panels (92a, 92b) to one another, the present disclosure is not limited to this configuration, and the link member (98) may be omitted. When the link member (98) is omitted, a plurality of actuator units (100) is provided to the solar panels such that each of the actuator units (100) drives an associated one of the solar panels. In this manner, each of the actuator units (100) can drive the associated solar panel.

Although each of the above embodiments includes the air bags (101, 102) connected to the back surface of the solar panel (92a) through the rod members (103, 104), the present disclosure is not limited to this configuration. The reception portions (101b, 102b) of the air bags (101, 102) may be directly connected to the back surface of the solar panel (92a).

Although each of the above embodiments includes the air bags (101, 102) respectively having openings (101c, 102c) through which air is supplied or exhausted, the present disclosure is not limited to this configuration. For example, each of the air bags (101, 102) may have two openings (101c, 102c). In this case, one of the openings may be used as an air supply opening for introducing compressed air into the air bag and the other one may be used as an exhaust opening for exhausting air from the air bag.

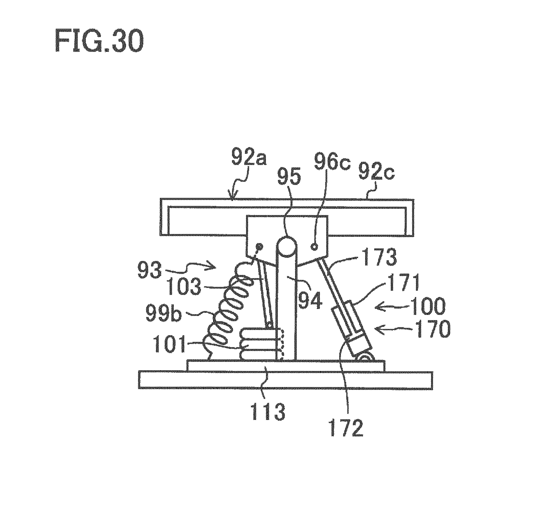

Although the compression spring (99a) constitutes the elastic member in Embodiment 2, the present disclosure is not limited to this configuration and a tension spring (99b) may constitute the elastic member. In this case, as shown in FIG. 30, it is suitable to provide the tension spring (99b) on a side located nearer to the first air bag (101) than the rotation shaft (95). With this configuration, a solar panel (92a) can be rotated in a predetermined direction (a first direction) by causing the air bag (101) to push the solar panel (92s) upward, and in a second direction opposite to the first direction by causing the tension spring (99b) to pull the solar panel (92a). In this manner, it is ensured that the solar panel (92s) rotates in both opposite directions.

### INDUSTRIAL APPLICABILITY

As described above, the present disclosure is particularly useful for hot water supply systems including solar power generation units.

### DESCRIPTION OF REFERENCE CHARACTERS

- 60: Air compressor (Air compression portion)
- 91: Solar panel unit
- 92a: Driving solar panel (Solar panel)
- 92b: Driven solar panels (Solar panels)
- 93: Solar panel driving mechanism
- 94: Pillars (Support members)
- 95: Rotation shafts
- 98: Link member (Link mechanism)
- 99a: Compression spring (Elastic member)
- 99b: Tension spring (Elastic member)
- 100: Actuator unit
- 101: First air bag (Air bag)
- 102: Second air bag (Air bag)
- 101a, 102a: Body
- 101b, 102b: Reception portion
- 101c, 102c: Air supply/exhaust opening (Opening)
- 103: First rod member (Rod member)
- 104: Second rod member (Rod member)
- 105: Air supply/exhaust mechanism
- 170: Lock mechanism

## Claims

1. A solar panel unit, comprising:
at least one solar panel (92a);
at least one support member (94) configured to support the solar panel (92a) through at least one rotation shaft (95); and
an actuator unit (100) including at least one air bag (101, 102) capable of extending and contracting according to an internal pressure, and configured to rotate the solar panel (92a) around an axis of the rotation shaft (95) according to extension and contraction of the air bag (101, 102).

2. The solar panel unit of claim 1, wherein
the air bag (101, 102) includes
an opening (101c, 102c) through which a space inside the air bag (101, 102) communicates with a space outside the air bag (101, 102),
a reception portion (101b, 102b) supporting a back surface of the solar panel (92a), and
a body (101a, 102a) configured to extend by means of compressed air so as to move the reception portion (101b, 102b) toward the solar panel (92a), and
the actuator unit (100) includes an air supply/exhaust mechanism (105) configured to perform, in a switchable manner, a first operation in which compressed air is supplied to the space inside the air bag (101, 102) through the opening (101c, 102c) and a second operation in which air in the air bag (101, 102) is exhausted to the outside of the air bag (101, 102) through the opening (101c, 102c).

3. The solar panel unit of claim 2, wherein
the actuator unit (100) includes the two air bags (101, 102) disposed such that the rotation shaft (95) is located between the air bags (101, 102).

4. The solar panel unit of claim 2, wherein
the actuator unit (100) includes
the air bag (101) as a single air bag, and
an elastic member (99a, 99b) causing an urging force to act on the solar panel (92a) in such a manner that the urging force acts in a direction opposite to a direction in which the solar panel rotates when the air bag (101) extends.

5. The solar panel unit of claim 4, wherein
the actuator unit (100) includes a lock mechanism (170) configured to control rotation of the solar panel (92a) urged by the elastic member (99a, 99b) to retain the solar panel (92a) at a predetermined rotational angle.

6. The solar panel unit of any one of claims 2-5, wherein
the actuator unit (100) includes a rod member (103, 104) having an end coupled to the back surface of the solar panel (92a) and another end coupled to the reception portion (101b, 102b) of the air bag (101, 102).

7. The solar panel unit of any one of claims 1-6, comprising
a plurality of the solar panels (92a, 92b),
a plurality of the support members (94, 94, ...) each supporting an associated one of the plurality of the solar panels (92a, 92b) through an associated one of the rotation shafts (95);
the actuator unit (100) provided in association with the solar panel (92a) included in the plurality of the solar panels (92a, 92b); and
a link mechanism (98) linking the plurality of the solar panels (92a , 92b) to one another such that all of the solar panels (92a, 92b) are positioned at an identical rotational angle.
